(19) Europäisches Patentamt
European Patent Office
Office européen des brevets

(11) EP 4 582 471 A1

(12) **EUROPEAN PATENT APPLICATION**
published in accordance with Art. 153(4) EPC

(43) Date of publication:
**09.07.2025 Bulletin 2025/28**

(21) Application number: **23860090.2**

(22) Date of filing: **18.08.2023**

(51) International Patent Classification (IPC):
***C08J 9/16*** *(2006.01)*

(52) Cooperative Patent Classification (CPC):
**C08J 9/16**

(86) International application number:
**PCT/JP2023/029853**

(87) International publication number:
**WO 2024/048327 (07.03.2024 Gazette 2024/10)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **31.08.2022 JP 2022137592**

(71) Applicant: **JSP Corporation**
**Tokyo 100-0005 (JP)**

(72) Inventors:
- **YAMASAKI, Shobu**
**Kanuma-shi, Tochigi 322-0014 (JP)**
- **ITO, Yosuke**
**Yokkaichi-shi, Mie 510-0881 (JP)**

(74) Representative: **Gille Hrabal Partnerschaftsgesellschaft mbB**
**Patentanwälte**
**Brucknerstraße 20**
**40593 Düsseldorf (DE)**

(54) **FOAM PARTICLE, AND FOAM PARTICLE MOLDED ARTICLE**

(57) An expanded bead comprising a polypropylene-based resin as a base resin and a hindered amine-based compound, in which the polypropylene-based resin has a degree of crystallinity of 45% or less, the hindered amine-based compound has a structure represented by the following formula (I), and a content of the hindered amine-based compound in the expanded bead is 0.01% by mass or more and 4% by mass or less, in which X represents an alkylene group, and $Y_1$ and $Y_2$ each independently represent a hydrocarbon group or a hydrocarbon group bonded via an oxygen atom.

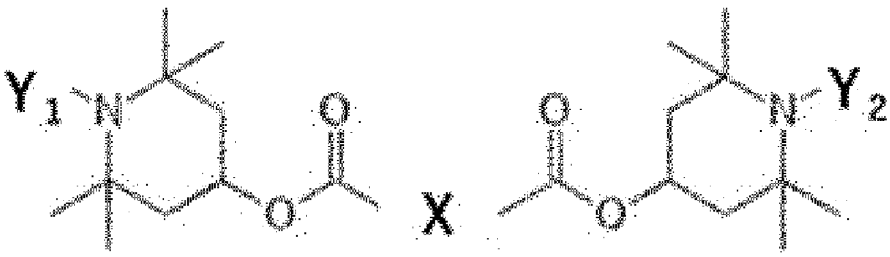

(I)

EP 4 582 471 A1

## Description

TECHNICAL FIELD

The present invention relates to expanded beads and an expanded beads molded article.

BACKGROUND ART

An expanded beads molded article obtained by in-mold molding of polypropylene-based resin expanded beads is excellent in chemical resistance, impact resistance, and compression strain recovery. Therefore, the polypropylene-based resin expanded beads molded article is used as an impact absorbing material, a heat insulating material, various packaging materials and the like in a wide range of fields such as food transport containers, packaging or cushioning materials for electric and electronic components, vehicle members such as automobile bumpers, building members such as residential heat insulating materials, and miscellaneous goods.

The polypropylene-based resin expanded beads molded article have excellent properties as described above. On the other hand, when the expanded beads molded article is used in a harsh environment, for example, when the expanded beads molded article is exposed to sunlight for a long period of time, the resin in the expanded beads molded article may deteriorate and the physical properties may decrease depending on the use environment. Therefore, in order to suppress the deterioration of the expanded beads molded article, an attempt has been made to enhance the weather resistance of the expanded beads molded article by adding a weather resistant agent.

For example, PTL 1 discloses polypropylene-based resin expanded beads which contains a hindered amine-based compound for the purpose of improving weather resistance in addition to fusion bonding properties and heat resistance, and in which a quantity of heat of fusion of an endothermic peak on a high-temperature side of a surface layer and a quantity of heat of fusion of an endothermic peak on a high-temperature side of an inner expanded layer satisfy a specific relationship in a DSC curve of the surface layer and the inner expanded layer.

In addition, from the viewpoint of reducing the energy required for in-mold molding, it is desirable that the polypropylene-based resin expanded beads used in the production of the expanded beads molded article are expanded beads capable of obtaining a good expanded beads molded article even under a low molding pressure condition. From such a viewpoint, the expanded beads may be produced using a polypropylene-based resin having a relatively low crystallinity.

CITATION LIST

PATENT LITERATURE

PTL 1:JP 2003-321567 A

SUMMARY OF INVENTION

TECHNICAL PROBLEM

However, when polypropylene-based resins having a relatively low crystallinity are used, it has been difficult to impart weather resistance over a long period of time even if a weather resistant agent is added in order to improve the weather resistance of the expanded beads molded article. In particular, in recent years, there are cases where the use of a polypropylene-based resin expanded beads molded article in applications where the molded article is more exposed to the outside is required. However, when a polypropylene-based resin having a relatively low crystallinity is used, it has been difficult to obtain an expanded beads molded article which can be used for a long period of time of several years to several decades even under severe conditions.

Further, due to the addition of the weather resistant agent, there are cases in which the in-mold moldability of the expanded beads is reduced and there are cases in which the tensile strength of the obtained expanded beads molded article is reduced. Therefore, it has been difficult to obtain expanded beads capable of producing an expanded beads molded article which is excellent in in-mold moldability, has high weather resistance, and is also excellent in physical properties.

An object of the present invention is to provide expanded beads having polypropylene-based resins as base resins, which are excellent in in-mold moldability and are capable of producing an expanded beads molded article capable of maintaining good appearance and good tensile physical properties over a long period of time even when used in environments exposed to the outside.

SOLUTION TO PROBLEM

The present inventors have found that expanded beads containing a specific hindered amine-based compound solve the above-mentioned problems.

That is, the present invention is as follows.

<1> An expanded bead containing a polypropylene-based resin as a base resin and a hindered amine-based compound, in which the polypropylene-based resin has a degree of crystallinity of 45% or less, the hindered amine-based compound has a structure represented by the following formula (I), and a content of the hindered amine-based compound in the expanded bead is 0.01% by mass or more and 4% by mass or less:

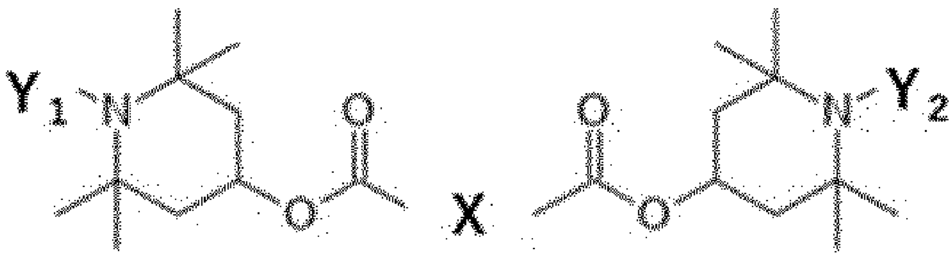

(I)

in which X represents an alkylene group, and $Y_1$ and $Y_2$ each independently represent a hydrocarbon group or a hydrocarbon group bonded via an oxygen atom.

<2> The expanded bead according to <1>, further containing an inorganic pigment, in which a ratio of a content of the hindered amine-based compound to a content of the inorganic pigment is 0.01 or more and 8 or less.

<3> The expanded bead according to <1> or <2>, further containing an ultraviolet light absorber A having a molecular weight of 360 or more, in which a content of the ultraviolet light absorber A in the expanded bead is 0.01% by mass or more and 2% by mass or less.

<4> The expanded bead according to any one of <1> to <3>, in which the hindered amine-based compound has a molecular weight of 500 or more and 1,000 or less.

<5> The expanded bead according to any one of <1> to <4>, in which a bulk density of the expanded bead is 10 $kg/m^3$ or more and 500 $kg/m^3$ or less.

<6> The expanded bead according to any one of <1> to <5>, in which an average cell diameter of the expanded beads is 50 $\mu m$ or more and 250 $\mu m$ or less.

<7> An expanded beads molded article produced by in-mold molding of the expanded bead according to any one of <1> to <6>.

ADVANTAGEOUS EFFECTS OF INVENTION

According to the present invention, it is possible to provide expanded beads having polypropylene-based resins as base resins, which are excellent in in-mold moldability and are capable of producing an expanded beads molded article capable of maintaining good appearance and good tensile physical properties over a long period of time even when used in environments exposed to the outside.

DESCRIPTION OF EMBODIMENTS

[Expanded Bead]

The expanded bead of the present invention (hereinafter, also simply referred to as "expanded bead") is an expanded bead containing a polypropylene-based resin as a base resin and a hindered amine-based compound, in which the polypropylene-based resin has a degree of crystallinity of 45% or less, the hindered amine-based compound has a structure represented by the following formula (I), and a content of the hindered amine-based compound in the expanded bead is 0.01% by mass or more and 4% by mass or less. In the description herein, a numerical range expressed using "to" means a range including numerical values described before and after "to" as a lower limit value and an upper limit value.

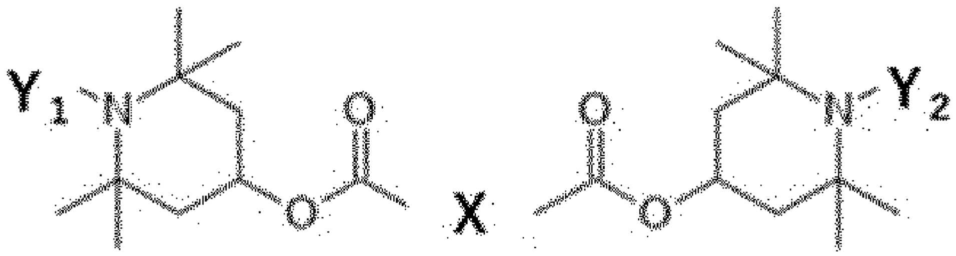

(I)

in which X represents an alkylene group, and $Y_1$ and $Y_2$ each independently represent a hydrocarbon group or a hydrocarbon group bonded via an oxygen atom.

<Polypropylene-based Resin>

The expanded beads contain a polypropylene-based resin as a base resin. The polypropylene-based resin in the description herein is a resin having a content of a structural unit derived from propylene in the resin of 50% by mass or more, and the content of the structural unit derived from propylene in the polypropylene-based resins is preferably 60% by mass or more, more preferably 70% by mass or more, still more preferably 80% by mass or more, and yet still more preferably 85% by mass or more.

In the present invention, as the polypropylene-based resin, a propylene-based copolymer, a mixture thereof, or a mixture of a propylene-based copolymer and a propylene homopolymer can be used.

Examples of the propylene-based copolymer include copolymers of propylene with ethylene and/or an α-olefin having 4 to 20 carbon atoms. Examples of the α-olefin include 1-butene, 1-pentene, 1-hexene, 1-octene, and 4-methyl-1-butene. In addition, the content of the component derived from ethylene and/or the component derived from an α-olefin having 4 to 20 carbon atoms contained in the propylene-based copolymer as a copolymerization component is preferably 1 to 15% by mass, and more preferably 2 to 12% by mass.

Among these, the polypropylene-based resin preferably contains, as a main component, a propylene-based copolymer A containing a component derived from ethylene and/or 1-butene as a copolymerization component. Examples of the propylene-based copolymer A include an ethylene-propylene copolymer and an ethylene-propylene-butene copolymer. In this case, the proportion of the propylene-based copolymer A in the polypropylene-based resin is preferably 60% by mass or more, more preferably 80% by mass or more, and still more preferably 90% by mass or more. The propylene-based copolymer A is more preferably a propylene-based random copolymer.

In a case where the propylene-based copolymer contains a component derived from ethylene (ethylene component) and/or a component derived from butene (butene component) as a copolymerization component, the content of the ethylene component and/or the butene component in the propylene-based copolymer is preferably 1% by mass or more, more preferably 2% by mass or more, and still more preferably 3% by mass or more, from the viewpoint of further improving the in-mold moldability of expanded beads under low molding pressure conditions. On the other hand, the content of the ethylene component and/or the butene component in the propylene-based copolymer is preferably 15% by mass or less, more preferably 12% by mass or less, and still more preferably 10% by mass or less, from the viewpoint of stably obtaining an expanded beads molded article having good compressive strength. That is, the content of the ethylene component and/or the butene component in the propylene-based copolymer is preferably 1 to 15% by mass, more preferably 2 to 12% by mass, and still more preferably 3 to 10% by mass. The content of the component derived from the α-olefin in the polypropylene-based copolymer is determined by **IR** spectrum measurement.

(Degree of Crystallinity)

The polypropylene-based resin in the present invention has a degree of crystallinity of 45% or less.

Conventionally, from the viewpoint of reducing energy required for in-mold molding, there has been a case where expanded beads are produced using a polypropylene-based resin having relatively low crystallinity. However, polypropylene-based resins having relatively low crystallinity have lower weather resistance than polypropylene-based resins having relatively high crystallinity, and it is sometimes difficult to impart weather resistance even when a weather resistant agent is added in order to improve the weather resistance of the expanded beads molded article. Further, in the case where polypropylene-based resins having relatively low crystallinity are used, the addition of the weather resistant agent may reduce the in-mold moldability of the expanded beads or may reduce the tensile strength of the obtained expanded beads molded article. Therefore, it has been difficult to obtain expanded beads capable of producing an expanded beads molded article which is excellent in in-mold moldability, has high weather resistance, and is also excellent in physical properties.

On the other hand, in the present invention, by using the specific hindered-based amine compound, it is possible to obtain expanded beads in which the expanded beads are favorably fusion bonded to each other even under relatively

low molding pressure conditions and the expanded beads molded article can be produced in a wide molding pressure range while using a polypropylene-based resin having relatively low crystallinity as the base resin. Further, a molded article having a good fusion bond state and weather resistance over a long period of time can be obtained.

The degree of crystallinity of the polypropylene-based resin is preferably 42% or less, and more preferably 40% or less from the viewpoint of enhancing the in-mold moldability of the expanded beads under a condition of a low molding pressure. The lower limit of the degree of crystallinity of the polypropylene-based resins is approximately 20%, and is preferably 25% and more preferably 30% from the viewpoint of capable of stably obtaining an expanded beads molded article having good compressive strength or the like. That is, the degree of crystallinity of the polypropylene-based resin is preferably 20% to 42%, more preferably 25% to 42%, and still more preferably 30% to 40%.

The degree of crystallinity of the polypropylene-based resin is calculated by dividing the quantity of heat of fusion of the polypropylene-based resin by the quantity of heat of fusion (207 J/g) of a complete crystal body of polypropylene (unit: %).

The quantity of heat of fusion of the polypropylene-based resin can be obtained from a DSC curve obtained by performing differential scanning calorimetry (DSC) based on JIS K 7122:1987. Specifically, first, as a condition adjustment of a test piece, "(2) When the melting temperature is measured after a certain heat treatment" is adopted, the test piece is heated from 23°C to 200°C at a heating rate of 10°C/min under the condition that the nitrogen inflow amount is 30 mL/min, then, the test piece is maintained at the temperature for 10 minutes, cooled to 23°C at a cooling rate of 10°C/min, and heated again to 200°C at a heating rate of 10°C/min, thereby obtaining a DSC curve (DSC curve at the time of the second heating). A point at a temperature of 80°C on the obtained DSC curve at the time of the second heating is defined as $\alpha$, and a point on the DSC curve corresponding to the melting end temperature is defined as $\beta$. The quantity of heat of fusion of the polypropylene-based resin can be calculated from the area of a portion surrounded by the DSC curve in the section between the point $\alpha$ and the point $\beta$ and the line segment ($\alpha$-$\beta$).

The degree of crystallinity of the polypropylene-based resin can be adjusted by the kind of the component derived from the $\alpha$-olefin contained as a copolymerization component in the polypropylene-based resin, and the content thereof, etc. For example, the degree of crystallinity of the polypropylene-based resin can be adjusted to be low by increasing the content of the $\alpha$-olefin component in the polypropylene-based resin.

(Melting Point)

The melting point of the polypropylene-based resin is preferably 120°C or higher, more preferably 125°C or higher, still more preferably 130°C or higher, and yet still more preferably 135°C or higher, from the viewpoint of enhancing the tensile physical properties of the expanded beads molded article obtained by in-mold molding the expanded beads of the present invention. On the other hand, the melting point of the polypropylene-based resin is preferably 155°C or lower, more preferably 150°C or lower, and still more preferably 145°C or lower, from the viewpoint of enhancing the in-mold moldability of the expanded beads under a condition of a low molding pressure. That is, the melting point of the polypropylene-based resin is preferably 120°C to 155°C, more preferably 125°C to 150°C, still more preferably 130°C to 145°C, and yet still more preferably 135°C to 145°C.

The melting point of the polypropylene-based resin is measured in accordance with JIS K 7121:2012 using the polypropylene-based resin as a test piece. Specifically, as a condition adjustment of a test piece, "(2) When the melting temperature is measured after a certain heat treatment" is adopted, the test piece is heated from 23°C to 200°C at a heating rate of 10°C/min under the condition that the nitrogen inflow amount is 30 mL/min, then, the test piece is maintained at the temperature for 10 minutes, cooled to 23°C at a cooling rate of 10°C/min, and heated again to 200°C at a heating rate of 10°C/min, thereby obtaining a DSC curve (DSC curve at the time of the second heating). Next, the peak temperature of the melting peak in the DSC curve is determined, and this value can be taken as the melting point of the polypropylene-based resin. When a plurality of melting peaks appear in the DSC curve, the temperature at the top of the melting peak having the highest height of the melting peak based on the baseline is adopted as the melting point.

(Melt Flow Rate (MFR))

The MFR of the polypropylene-based resin is preferably 3 g/10 min or more, and more preferably 5 g/10 min or more, from the viewpoint of enhancing expandability during expanding of the resin particles or from the viewpoint of enhancing secondary expandability during in-mold molding of the expanded beads. On the other hand, the MFR of the polypropylene-based resin is preferably 10 g/10 min or less, and more preferably 9 g/10 min or less, from the viewpoint of making it easier to stably suppress the shrinkage of the expanded beads or from the viewpoint of making it easier to suppress excessive sink marks on the molded article during in-mold molding of the expanded beads. That is, the MFR of the polypropylene-based resin is preferably 3 to 10 g/10 min, and more preferably 5 to 9 g/10 min.

The MFR of the polypropylene-based resin is a value measured based on JIS K 7210-1:2014 under the conditions of a temperature of 230°C and a load of 2.16 kg.

<Hindered Amine-based Compound>

The expanded beads of the present invention contain a hindered amine-based compound from the viewpoint of imparting weather resistance over a long period of time to the expanded beads molded article to be obtained.

The hindered amine-based compound has a structure represented by the following formula (I). The hindered amine-based compound may be used alone or in combination of two or more kinds thereof.

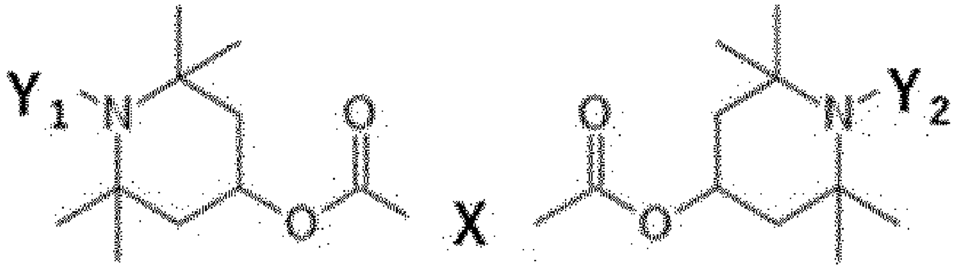

(I)

in which X represents an alkylene group, and $Y_1$ and $Y_2$ each independently represent a hydrocarbon group or a hydrocarbon group bonded via an oxygen atom.

When the hindered amine-based compound has a 2,2,6,6-tetramethyl-4-piperidine amine moiety in its structure, the hindered amine-based compound can consume radicals particularly generated by light, suppress molecular chain cleavage (reduction in molecular weight) of the resin due to oxidation, and improve weather resistance of the resin.

In addition, since the hindered amine-based compound has a structure in which an alkylene group and a 2,2,6,6-tetramethyl-4-piperidine amine moiety are bonded by an ester bond, it is possible to stably obtain expanded beads in which the refinement of cells is suppressed and to enhance the fusion bonding properties of the expanded beads during in-mold molding.

In the formula (I), the number of carbon atoms of the alkylene group represented by X is preferably 1 or more, more preferably 3 or more, still more preferably 5 or more, and yet still more preferably 7 or more. On the other hand, the number of carbon atoms of the alkylene group is preferably 20 or less, more preferably 15 or less, still more preferably 13 or less, and yet still more preferably 10 or less. That is, from the viewpoint of more easily exhibiting the effects of the present invention, the number of carbon atoms of the alkylene group represented by X in the formula (I) is preferably 1 to 20, more preferably 3 to 15, still more preferably 5 to 13, and yet still more preferably 7 to 10.

In the formula (I), $Y_1$ and $Y_2$ each independently represent a hydrocarbon group or a hydrocarbon group bonded via an oxygen atom. The number of carbon atoms in the hydrocarbon groups of $Y_1$ and $Y_2$ is preferably 1 or more, more preferably 3 or more, and still more preferably 5 or more, respectively, from the viewpoint that weather resistance in a relatively long period of time can be stably imparted to the expanded beads molded article to be obtained. On the other hand, the number of carbon atoms in the hydrocarbon groups of $Y_1$ and $Y_2$ is preferably 20 or less, more preferably 16 or less, and still more preferably 12 or less, respectively, from the viewpoint that the weather resistance of the molded article in a relatively short period of time after the molding of the expanded beads molded article can be stably enhanced. That is, from the viewpoint of making it easier to exhibit the effects of the present invention, the number of carbon atoms in the hydrocarbon group of $Y_1$ and $Y_2$ is preferably 1 to 20, more preferably 3 to 16, and still more preferably 5 to 12. In addition, the hydrocarbon group of $Y_1$ and $Y_2$ is preferably an alkyl group.

Among the hindered amine-based compounds having a structure represented by the formula (I), a hindered amine-based compound in which $Y_1$ and $Y_2$ are each a hydrocarbon group is referred to as an NR-type hindered amine. Among the hindered amine-based compounds having a structure represented by the formula (I), a hindered amine-based compound in which $Y_1$ and $Y_2$ are each a hydrocarbon group bonded to each other via an oxygen atom is referred to as an NOR-type hindered amine. Further, among the hindered amine-based compounds having a structure represented by the formula (I), a hindered amine-based compound in which $Y_1$ and $Y_2$ are each a hydrogen atom is referred to as an NH-type hindered amine.

Since the expanded beads of the present invention contain the NR-type hindered amine or the NOR-type hindered amine having a structure represented by the formula (I), it is possible to obtain an expanded beads molded article which is excellent in in-mold moldability and exhibits high weather resistance over a long period of time. The reason for this is not clear, but it is considered as follows.

It is considered that the NR-type hindered amine or the NOR-type hindered amine having the structure represented by the formula (I) is less likely to generate an attractive force due to interaction with an inorganic dispersant such as kaolin when added to resin particles for producing expanded beads, as compared with the NH-type hindered amine, and therefore, when the resin particles are expanded, the inorganic dispersant in a dispersing medium is easily prevented from adhering to the surfaces of the resin particles. In addition, since the hindered amine-based compound

having the structure represented by the formula (I) has no amino group other than the 2,2,6,6-tetramethyl-4-piperidine amine moiety, it is considered that an attractive force due to an interaction with an inorganic dispersant such as kaolin is hardly generated and the inorganic dispersant is hardly held on the surfaces of the expanded beads. As a result, it is considered that even when the hindered amine-based compound is added, the fusion bonding properties of the obtained expanded beads can be easily maintained at a high level, and therefore, expanded beads excellent in in-mold moldability can be obtained.

In addition, it is considered that the NR-type hindered amine and the NOR-type hindered amine having the structure represented by the formula (I) are less likely to be affected by acidic substances with which the expanded beads and the expanded beads molded article to be obtained are brought into contact and are less likely to be deactivated than the NH-type hindered amine. Therefore, it is considered that an expanded beads molded article having excellent weather resistance over a long period of time can be obtained.

The hindered amine-based compound preferably contains an NOR-type hindered amine as a main component from the viewpoint of being capable of more stably obtaining an expanded beads molded article which is excellent in in-mold moldability and exhibits high weather resistance over a long period of time. In this case, the proportion of the NOR-type hindered amine in the hindered amine-based compound is preferably 60% by mass or more, more preferably 80% by mass or more, and still more preferably 90% by mass or more.

As the hindered amine-based compound, a commercially available product can be used. Examples of the commercially available product of the hindered amine-based compound include trade names "Tinuvin 123", "Tinuvin 5100", "Tinuvin 292", and "Tinuvin 765" (all manufactured by BASF SE).

(Molecular Weight)

The molecular weight of the hindered amine-based compound is preferably 400 or more, more preferably 500 or more, and still more preferably 600 or more, from the viewpoint of suppressing bleed-out from the molded article and stably exhibiting weather resistance over a long period of time in the molded article. On the other hand, the molecular weight of the hindered amine-based compound is preferably 1,000 or less, more preferably 900 or less, and still more preferably 800 or less, from the viewpoint of favorably dispersing the hindered amine-based compound in the resin and stably exhibiting weather resistance in the molded article even in a relatively short period of time. That is, the molecular weight of the hindered amine-based compound is preferably 400 to 1,000, more preferably 500 to 900, and still more preferably 600 to 800.

The molecular weight of the hindered amine-based compound can be determined from the atomic weight of atoms constituting the hindered amine-based compound. In addition, the structure of the NOR-type hindered amine-based compound contained in the expanded beads may be specified by performing measurement such as proton nuclear magnetic resonance ($^1$H-NMR) on the expanded beads, and the molecular weight of the NOR-type hindered amine-based compound may be obtained from the structure.

The content of the hindered amine-based compound in the expanded beads is 0.01% by mass or more, preferably 0.05% by mass or more, more preferably 0.1% by mass or more, and still more preferably 0.2% by mass or more, from the viewpoint of stably exhibiting weather resistance over a long period of time in the molded article. On the other hand, the content of the hindered amine-based compound in the expanded beads is 4% by mass or less, preferably 3% by mass or less, more preferably 2% by mass or less, and still more preferably 1% by mass or less, from the viewpoint that the expanded beads having good in-mold moldability can be stably obtained and an expanded beads molded article having excellent tensile strength can be easily obtained. That is, the content of the hindered amine-based compound in the expanded beads is preferably 0.05 to 4% by mass, more preferably 0.1 to 3% by mass, still more preferably 0.1 to 2% by mass, and yet still more preferably 0.2 to 1% by mass.

The expanded beads may contain a hindered amine-based compound other than the hindered amine-based compound having a structure represented by the formula (I) as long as the object and the effect of the present invention are not impaired. On the other hand, from the viewpoint of stably obtaining expanded beads having good in-mold moldability, in this case, the content of the hindered amine-based compound other than the hindered amine-based compound having the structure represented by the formula (I) in the expanded beads is preferably 40 parts by mass or less, more preferably 30 parts by mass or less, still more preferably 20 parts by mass or less, and yet still more preferably 10 parts by mass or less with respect to 100 parts by mass of the hindered amine-based compound having the structure represented by the formula (I).

The content of the hindered amine-based compound in the expanded beads can be calculated by, for example, subjecting the expanded beads to proton nuclear magnetic resonance ($^1$H-NMR) measurement. Specifically, the following method can be adopted. First, the expanded beads are freeze-pulverized, and about 2 g of the expanded beads are weighed. Next, the freeze-pulverized expanded beads are subjected to Soxhlet extraction using chloroform as a solvent to remove a polymer component which is a chloroform-insoluble portion. Subsequently, the chloroform-soluble portion obtained by Soxhlet extraction is mixed with acetone to remove an acetone-insoluble portion. The solid obtained by

removing the solvent from the acetone-soluble portion is used as a measurement sample, and measurement is performed by proton nuclear magnetic resonance ($^1$H-NMR). The content of the hindered amine-based compound in the measurement sample is calculated from the integral ratio of the peak of the hindered amine-based compound to the peak of the standard (internal standard sample) having a known concentration, and the content of the hindered amine-based compound per one expanded bead is calculated.

As the proton nuclear magnetic resonance ($^1$H-NMR), for example, AL-400 type manufactured by JEOL Ltd. can be used. In addition, measurement conditions in which the solvent is $CDCl_3$ and the internal standard sample is tetrachloroethane (TCE) can be adopted.

<Pigment>

The expanded beads of the present invention preferably further contain a pigment from the viewpoint of imparting a good appearance to the molded article. The pigment may be any of an inorganic pigment and an organic pigment, and an inorganic pigment is preferable.

Examples of the organic pigment include azo pigments, diazo pigments, phthalocyanine pigments, quinacridone pigments, isoindolinone pigments, dioxazine pigments, perylene pigments, perinone pigments, thioindigo pigments, anthraquinone pigments, and quinophthalone pigments.

Examples of the inorganic pigment include black inorganic substances such as carbon black, carbon nanotube, graphene, iron black, and titanium black, white inorganic substances such as titanium dioxide, zinc oxide, silica, alumina, magnesium oxide, antimony trioxide, barium sulfate, and lithopone, red inorganic substances such as red iron oxide, yellow inorganic substances such as yellow iron oxide and zinc yellow, green inorganic substances such as viridian and cobalt green, and blue inorganic substances such as ultramarine blue, Prussian blue, cobalt blue, and YInMn blue. In the description herein, the pigment means a substance having an action of imparting a color to the expanded beads or the expanded beads molded article or an action of toning the expanded beads or the expanded beads molded article by being present in a resin component constituting the expanded beads. In addition, the pigment contained in the expanded beads refers to a pigment presents in the resin component constituting the expanded beads.

From the viewpoint that an appearance such as a good black color can be imparted, the inorganic pigment preferably contains carbon black and/or titanium oxide. In addition, in a case where the inorganic pigment contains carbon black, the proportion of carbon black in the inorganic pigment is preferably 50% by mass or more, more preferably 60% by mass or more, still more preferably 80% by mass or more, and yet still more preferably 90% by mass or more.

As the carbon black, for example, channel black, roller black, furnace black, thermal black, and acetylene black can be used.

In a case where the expanded beads contain an inorganic pigment, the content of the inorganic pigment in the expanded beads is preferably 0.01% by mass or more, more preferably 0.05% by mass or more, still more preferably 0.1% by mass or more, yet still more preferably 1% by mass or more, and yet still more preferably 2% by mass or more, from the viewpoint of suppressing the occurrence of color unevenness in the molded article and easily obtaining a molded article having a good appearance. On the other hand, from the viewpoint of stably obtaining expanded beads having good in-mold moldability, the content of the inorganic pigment in the expanded beads is preferably 10% by mass or less, more preferably 8% by mass or less, still more preferably 5% by mass or less, and yet still more preferably 4% by mass or less. That is, the content of the inorganic pigment in the expanded beads is preferably 0.01 to 10% by mass, more preferably 0.05 to 8% by mass, still more preferably 0.1 to 5% by mass, yet still more preferably 1 to 4% by mass, and yet still more preferably 2 to 4% by mass.

Conventionally, when inorganic pigments are added to expanded beads in order to impart color to the expanded beads molded article, there has been a tendency that the in-mold moldability of the expanded beads deteriorates. On the other hand, in the present invention, by using the specific hindered amine-based compound, even in a case where an inorganic pigment is added to the expanded beads, it is possible to obtain expanded beads in which the expanded beads are favorably fusion bonded to each other even under a relatively low molding pressure condition and the expanded beads molded article can be produced in a wide molding pressure range. Further, a molded article having a good fusion bond state and weather resistance over a long period of time can be obtained.

(Content of Hindered Amine-based Compound/Content of Inorganic Pigment)

In a case where the expanded beads contain an inorganic pigment, the ratio of the content of the hindered amine-based compound to the content of the inorganic pigment in the expanded beads is preferably 0.01 or more, more preferably 0.02 or more, still more preferably 0.04 or more, and yet still more preferably 0.05 or more, from the viewpoint of stably obtaining expanded beads capable of producing an expanded beads molded article exhibiting good weather resistance over a long period of time. On the other hand, the ratio of the content of the hindered amine-based compound to the content of the inorganic pigment in the expanded beads is preferably 10 or less, more preferably 8 or less, still more

preferably 6 or less, and yet still more preferably 3 or less, from the viewpoint that the expanded beads having good fusion bonding properties and good in-mold moldability can be stably obtained. That is, the ratio of the content of the hindered amine-based compound to the content of the inorganic pigment in the expanded beads is preferably 0.01 to 10, more preferably 0.02 to 8, still more preferably 0.04 to 6, and yet still more preferably 0.05 to 3.

<Ultraviolet Light Absorber>

The expanded beads of the present invention preferably contain an ultraviolet light absorber from the viewpoint of enhancing the weather resistance of the molded article. The ultraviolet light absorber preferably contains an ultraviolet light absorber A having a molecular weight of 360 or more.

The ultraviolet light absorber is a compound having a property of absorbing ultraviolet rays, and means a compound capable of suppressing deterioration of a resin caused by ultraviolet rays by absorbing light mainly having a wavelength of 280 nm to 400 nm and changing the absorbed energy into energy such as heat. Examples of the ultraviolet light absorber used for the polypropylene-based resin include a benzophenone-based compound (benzophenone-based ultraviolet light absorber) such as a benzophenone derivative, a benzotriazole-based compound (benzotriazole-based ultraviolet light absorber) such as a benzotriazole derivative, a triazine-based ultraviolet light absorber (triazine-based ultraviolet light absorber) such as a triazine derivative, and a benzoate-based compound (benzoate-based ultraviolet light absorber) such as a benzoic acid ester or a derivative thereof.

(Molecular Weight)

The molecular weight of the ultraviolet light absorber A is preferably 300 or more, more preferably 360 or more, still more preferably 380 or more, and yet still more preferably 400 or more, from the viewpoint of imparting more excellent weather resistance to the expanded beads molded article over a long period of time. On the other hand, the upper limit of the molecular weight of the ultraviolet light absorber A is not particularly limited as long as it is within a range in which the intended object of the present invention can be achieved, and from the viewpoint that the ultraviolet light absorber can be efficiently added to the polypropylene-based resin and the weather resistance of the obtained expanded beads molded article can be stably enhanced, it is preferably 600, and more preferably 550. That is, the molecular weight of the ultraviolet light absorber A is preferably 300 to 600, more preferably 360 to 600, still more preferably 380 to 550, and yet still more preferably 400 to 550.

The molecular weight of the ultraviolet light absorber A can be determined from the atomic weight of atoms constituting the ultraviolet light absorber A. In addition, the molecular weight can also be measured by Field Desorption-Mass Spectroscopy (FD-MS). In this case, for example, the measurement can be performed by the following method.

As an apparatus, a gas chromatograph-time-of-flight mass spectrometer JMD-T100GCV type manufactured by JEOL Ltd. can be used. Ten mg of an ultraviolet light absorber is dissolved in 10 mL of chloroform to obtain an ultraviolet light absorber solution. The ultraviolet light absorber is introduced into the apparatus by applying 1 $\mu$L of the ultraviolet light absorber solution onto the emitter of the apparatus using a microsyringe. Thereafter, the molecules of the ultraviolet light absorber are ionized, and a spectrum of m/z values of the ions is obtained. The m/z value which is a main peak of the spectrum is measured as a molecular ion of the ultraviolet light absorber, and can be determined as the molecular weight of the ultraviolet light absorber.

As the ultraviolet light absorber A, for example, a benzoate-based compound, a triazine-based compound, and a benzotriazole-based compound can be suitably used. Among these, the ultraviolet light absorber A preferably contains at least one selected from the group consisting of a benzoate-based compound and a triazine-based compound, and more preferably contains a benzoate-based compound and a triazine-based compound, from the viewpoint of easily obtaining an expanded beads molded article having excellent tensile strength. In this case, the proportion of the benzoate-based compound and/or the triazine-based compound in the ultraviolet light absorber A is preferably 50% by mass or more, more preferably 60% by mass or more, still more preferably 80% by mass or more, and yet still more preferably 90% by mass or more.

On the other hand, when the ultraviolet light absorber A contains a benzoate-based compound and a triazine-based compound, the ratio of the content of the triazine-based compound to the content of the benzoate-based compound is preferably 0.1 or more and 0.8 or less, and more preferably 0.2 or more and 0.6 or less. In this case, it is possible to obtain an expanded beads molded article having more excellent long-term weather resistance.

In a case where the expanded beads contain the ultraviolet light absorber A, from the viewpoint of stably obtaining an expanded beads molded article exhibiting excellent weather resistance over a long period of time, the content of the ultraviolet light absorber A in the expanded beads is preferably 0.01% by mass or more, more preferably 0.05% by mass or more, still more preferably 0.1% by mass or more, and yet still more preferably 0.2% by mass or more. On the other hand, the content of the ultraviolet light absorber A in the expanded beads is preferably 2% by mass or less, and more preferably 1% by mass or less, from the viewpoint of stably obtaining expanded beads having good in-mold moldability. That is, in a case where the expanded beads contain the ultraviolet light absorber A, the content of the ultraviolet light absorber A in the expanded beads is preferably 0.01 to 2% by mass, more preferably 0.05 to 2% by mass, still more preferably 0.1 to 1 by

mass, and still more preferably 0.2% to 1% by mass.

The expanded beads may contain an ultraviolet light absorber other than the ultraviolet light absorber A. On the other hand, from the viewpoint of stably obtaining expanded beads having good in-mold moldability, in this case, the content of the ultraviolet light absorber other than the ultraviolet light absorber A in the expanded beads is preferably 40 parts by mass or less, more preferably 30 parts by mass or less, still more preferably 20 parts by mass or less, and yet still more preferably 10 parts by mass or less with respect to 100 parts by mass of the ultraviolet light absorber A.

The content of the ultraviolet light absorber A in the expanded beads can be calculated, for example, by performing proton nuclear magnetic resonance ($^1$H-NMR) measurement on the expanded beads in the same manner as the measurement of the content of the hindered amine-based compound in the expanded beads.

(Melting Point)

The melting point of the ultraviolet light absorber A is preferably 50°C or higher, more preferably 100°C or higher, still more preferably 120°C or higher, and yet still more preferably 130°C or higher, from the viewpoint that the migration of the ultraviolet light absorber in the resin in the expanded beads is easily suppressed and the expanded beads having good in-mold moldability can be stably obtained. On the other hand, the melting point of the ultraviolet light absorber A is preferably 220°C or lower and more preferably 200°C or lower. That is, the melting point of the ultraviolet light absorber A is preferably 50°C to 220°C, more preferably 100°C to 220°C, still more preferably 120°C to 200°C, and yet still more preferably 130°C to 200°C.

The melting point of the ultraviolet light absorber A is measured in accordance with JIS K 0064:1992. Specifically, first, an ultraviolet light absorber which is a sample is put into a glass capillary, and the sample is packed in a closed surface side of the capillary. Silicone oil is put into a glass heating container to which a thermometer is attached, and the closed surface side of the capillary is immersed. Thereafter, heating is continued so that the temperature rising rate of the silicone oil becomes constant, and the temperature at the time when no solid is visually observed inside the capillary is defined as the melting point.

As the ultraviolet light absorber A, a commercially available product can be used. Examples of commercially available products of the ultraviolet light absorber A include, as a benzotriazole-based ultraviolet light absorber, trade names "Tinuvin 99-2", "Tinuvin 326", "Tinuvin 384-2", "Tinuvin 900", "Tinuvin 928", and "Tinuvin 1130" manufactured by BASF SE, as a benzoate-based ultraviolet light absorber, trade name "Tinuvin 120" manufactured by BASF SE, and trade name "Cyasorb UV-2908" manufactured by Solvay, and as a triazine-based ultraviolet light absorber, trade name "Tinuvin 1577" manufactured by BASF SE, and trade name "Cyasorb UV-1164" manufactured by Solvay.

(Content of Ultraviolet Light Absorber A/Content of Hindered Amine-based Compound)

From the viewpoint of stably obtaining expanded beads capable of producing an expanded beads molded article exhibiting excellent weather resistance over a long period of time, in a case where the expanded beads contain the ultraviolet light absorber A, the ratio of the content of the ultraviolet light absorber A to the content of the hindered amine-based compound in the expanded beads is preferably 0.1 or more, more preferably 0.3 or more, still more preferably 0.6 or more, and yet still more preferably 0.8 or more. On the other hand, from the viewpoint of stably obtaining expanded beads having good in-mold moldability, the ratio of the content of the ultraviolet light absorber A to the content of the hindered amine-based compound in the expanded beads is preferably 5 or less, more preferably 4 or less, still more preferably 3 or less, and yet still more preferably 2 or less. That is, the ratio of the content of the ultraviolet light absorber A to the content of the hindered amine-based compound in the expanded beads is preferably 0.1 to 5, more preferably 0.3 to 4, still more preferably 0.6 to 3, and yet still more preferably 0.8 to 2.

(Content of Ultraviolet Light Absorber A/Content of Inorganic Pigment)

From the viewpoint of stably obtaining expanded beads capable of producing an expanded beads molded article having a good appearance without color unevenness and exhibiting excellent weather resistance over a long period of time, in a case where the expanded beads contain the inorganic pigment, the ratio of the content of the ultraviolet light absorber A to the content of the inorganic pigment in the expanded beads is preferably 0.01 or more, more preferably 0.05 or more, and still more preferably 0.1 or more. On the other hand, from the viewpoint of stably obtaining an expanded beads molded article having excellent tensile physical properties, in a case where the expanded beads contain the inorganic pigment, the ratio of the content of the ultraviolet light absorber A to the content of the inorganic pigment in the expanded beads is preferably 5 or less, more preferably 4 or less, still more preferably 3 or less, and yet still more preferably 2 or less. That is, the ratio of the content of the ultraviolet light absorber A to the content of the inorganic pigment in the expanded beads is preferably 0.01 to 5, more preferably 0.05 to 4, still more preferably 0.1 to 3, and yet still more preferably 0.1 to 2.

<Physical Properties of Expanded Beads>

(Bulk Density)

The bulk density of the expanded beads is preferably 10 $kg/m^3$ or more, more preferably 15 $kg/m^3$ or more, still more preferably 20 $kg/m^3$ or more, and yet still more preferably 25 $kg/m^3$ or more, and is also preferably 500 $kg/m^3$ or less, more preferably 100 $kg/m^3$ or less, still more preferably 70 $kg/m^3$ or less, and yet still more preferably 60 $kg/m^3$ or less, from the viewpoint of achieving a good balance between the mechanical strength and the lightness of the expanded beads molded article. That is, the bulk density of the expanded beads is preferably 10 to 500 $kg/m^3$, more preferably 15 to 100 $kg/m^3$, still more preferably 20 to 70 $kg/m^3$, and yet still more preferably 25 to 60 $kg/m^3$.

The bulk density of the expanded beads is determined as follows. The bulk density of the expanded beads is obtained by taking out the expanded beads at random from a group of expanded beads, placing them in a measuring cylinder having a volume of 1 L, accommodating a large number of expanded beads up to a scale of 1 L so as to be in a naturally deposited state, dividing the mass W 1 [g] of the accommodated expanded beads by the accommodating volume V1 (1 [L]) (W1/V1), and converting the unit into [$kg/m^3$].

(Average Cell Diameter)

The average cell diameter of the expanded beads is preferably 50 μm or more, more preferably 55 μm or more, and still more preferably 60 μm or more, and is also preferably 250 μm or less, more preferably 200 μm or less, still more preferably 150 μm or less, and yet still more preferably 120 μm or less, from the viewpoint of enhancing in-mold moldability of the expanded beads to thereby stably obtain expanded beads capable of producing a molded article having excellent tensile physical properties and exhibiting excellent weather resistance over a long period of time. That is, the average cell diameter of the expanded beads is preferably 50 to 250 μm, more preferably 55 to 200 μm, still more preferably 60 to 150 μm, and yet still more preferably 60 to 120 μm.

The average cell diameter of the expanded beads can be measured by drawing a plurality of line segments from the outermost surface of the expanded bead through the central portion to the outermost surface on the opposite side in an enlarged photograph of the cross section of the expanded bead divided into two, and dividing the total length of the line segments by the total number of cells intersecting each line segment. Specifically, the average cell diameter can be measured by the method described in Examples.

The average cell diameter of the expanded beads can be adjusted to fall within a desired range by adjusting the type and addition amount of the cell controlling agent to be added to the resin particles, and the addition amount of the hindered amine-based compound, and adjusting the pressure at the time of expansion at the time of expansion of the resin particles.

(Crystal Structure)

The expanded beads are preferably expanded beads obtained by expanding resin particles which have not been subjected to surface modification with an organic peroxide. In this case, expanded beads capable of in-mold molding at a relatively low molding pressure can be produced with high productivity. In view of the above, it is preferable that the expanded beads have a crystal structure in which, in a DSC curve obtained by heating from 23°C to 200°C at a heating rate of 10°C/min in accordance with JIS K 7122:1987, a melting peak (intrinsic peak) intrinsic to the polypropylene-based resin and one or more melting peaks (high-temperature peaks) appear on a higher temperature side than the intrinsic peak. It is more preferable that the expanded beads have the above-described crystal structure and satisfy the relationship represented by the following formula (1).

$$\Delta Hs \geq \Delta Hi \times 0.86 \qquad (1)$$

In the formula (1), ΔHs is a quantity of heat of fusion at the high-temperature peak of the surface layer portion of the expanded beads, and ΔHi is a quantity of heat of fusion at the high-temperature peak of the inner portion of the expanded beads.

In addition, from the viewpoint of enabling in-mold molding at a relatively low molding pressure and stably obtaining a molded article having good tensile physical properties, it is preferable that the expanded beads satisfy the formula (1) and the following formula (2).

$$\Delta Hi \times 1.2 \geq \Delta Hs \qquad (2)$$

ΔHs can be measured according to the same method as the method for measuring the quantity of heat of fusion at the high-temperature peak of the expanded beads, except that a sample cut out from the surface layer portion of the expanded bead is used. ΔHi can be measured according to the same method as the method for measuring the quantity of heat of fusion at the high-temperature peak of the expanded beads, except that a sample cut out from the inner portion of the expanded bead so as not to include the surface layer portion thereof is used.

The surface layer portion of the expanded beads means a portion included in a range from the surface of the expanded bead to a depth of 200 μm toward the center of the expanded bead. **In** preparing the sample, the sample of the surface layer portion or the inner portion is cut out from plural expanded beads. Predetermined amounts of the samples are prepared and may be used in the measurement.

Specifically, the above melting peak can be obtained by the following method. A DSC curve can be obtained by raising the temperature of 1 to 3 mg of the expanded beads from 23°C to 200°C at a heating rate of 10°C/min using a differential scanning calorimeter, and the melting peak (high-temperature peak) can be confirmed from the DSC curve.

In this case, the DSC curve means a DSC curve obtained by heating the expanded beads by the above measurement method (DSC curve in the first heating). In addition, the melting peak intrinsic to the resin (intrinsic peak) means a melting peak due to melting of crystals intrinsic to the polypropylene-based resin constituting the expanded beads. It is considered that the intrinsic peak is a melting peak appearing due to melting of crystals normally included in the polypropylene-based resin constituting the expanded beads.

On the other hand, the melting peak (high-temperature peak) on the higher temperature side than the intrinsic peak is a melting peak appearing on the higher temperature side than the intrinsic peak in the first DSC curve. When this high-temperature peak appears, it is presumed that secondary crystals are present in the resin. In the DSC curve (DSC curve in the second heating) obtained when the expanded beads are heated from 23°C to 200°C at a heating rate of 10°C/min (first heating), then cooled from 200°C to 23°C at a cooling rate of 10°C/min, and then heated again from 23°C to 200°C at a heating rate of 10°C/min (second heating), only a melting peak due to the melting of crystals intrinsic to the polypropylene-based resin which is the base resin of the expanded beads appears. Since this intrinsic peak appears in both the DSC curve in the first heating and the DSC curve in the second heating, it is possible to confirm which peak is the intrinsic peak by comparing the shapes of the first and second DSC curves and the positions of the peaks in the respective DSC curves.

The expanded beads are preferably expanded beads in which only a melting peak (intrinsic peak) intrinsic to the polypropylene-based resin appears in a DSC curve in the second heating obtained when the expanded beads are heated from 23°C to 200°C at a heating rate of 10°C/min, then cooled from 200°C to 23°C at a cooling rate of 10°C/min, and then heated from 23°C to 200°C at a heating rate of 10°C/min.

(Quantity of Heat of Fusion at High-Temperature Peak)

The quantity of heat of fusion at the high-temperature peak of the expanded beads is preferably 5 J/g or more, more preferably 7 J/g or more, and still more preferably 10 J/g or more, and is also preferably 40 J/g or less, more preferably 30 J/g or less, and still more preferably 20 J/g or less, from the viewpoint of widening the range of molding conditions in which a good expanded beads molded article can be obtained. That is, the quantity of heat of fusion at the high-temperature peak of the expanded beads is preferably 5 to 40 J/g, more preferably 7 to 30 J/g, and still more preferably 10 to 20 J/g.

The quantity of heat of fusion at the high-temperature peak of the expanded beads can be measured according to the above-mentioned method. More specifically, it can be measured according to the method described in Examples.

(Degree of Crystallinity)

The degree of crystallinity of the expanded beads is preferably 42% or less, more preferably 40% or less, and still more preferably 38% or less from the viewpoint of enhancing the in-mold moldability of the expanded beads under a condition of a low molding pressure. The lower limit of the degree of crystallinity of the expanded beads is preferably approximately 20%, and is preferably 22% and more preferably 25% from the viewpoint of capable of stably obtaining an expanded beads molded article having good compressive strength. That is, the degree of crystallinity of the expanded beads is preferably 20% to 42%, more preferably 22% to 40%, and still more preferably 25% to 38%.

The degree of crystallinity of the expanded beads is calculated by dividing the quantity of heat of fusion of the expanded beads by the quantity of heat of fusion (207 J/g) of a complete crystal body of polypropylene (unit: %).

The quantity of heat of fusion of the expanded beads is calculated as a sum of the quantity of heat of fusion of all the melting peaks (endothermic peaks) appearing in the first DSC curve measured in accordance with JIS K 7122:1987. More specifically, it can be measured according to the method described in Examples.

Since the degree of crystallinity of the expanded beads is close to that of the polypropylene-based resin used for producing the expanded beads, the degree of crystallinity of the expanded beads can be adjusted by adjusting the type of

the polypropylene-based resin used or the like.

An additive may be appropriately added to the expanded beads as long as the effects of the present invention are not impaired. Examples of the additive include an antioxidant, an antistatic agent, a conductive filler, a flame retardant, a dye, and a cell controlling agent. These additives can be contained in the expanded beads by, for example, being added when the resin particles are granulated.

As the cell controlling agent, for example, an inorganic powder or an organic powder can be used. Examples of the inorganic powder include metal borates such as zinc borate and magnesium borate, and examples of the organic powder include fluororesin powders such as polytetrafluoroethylene. From the viewpoint of easily adjusting the average cell diameter of the expanded beads to a desired range, it is preferable to use a metal borate as the cell controlling agent, and it is more preferable to use zinc borate.

When zinc borate is used, the number-based arithmetic average particle diameter thereof is preferably 0.5 μm or more and 10 μm or less, and more preferably 1 μm or more and 8 μm or less. The number-based arithmetic average particle diameter of zinc borate can be obtained by obtaining a number-based particle size distribution by converting a volume-based particle size distribution measured by a laser diffraction scattering method into a number-based particle size distribution by assuming that the shape of the particles is a sphere, and arithmetically averaging the particle diameters based on the number-based particle size distribution. Here, the particle diameter means the diameter of a virtual sphere having the same volume as the particle.

The blending amount of the cell controlling agent in the resin particles is preferably 50 ppm by mass or more, more preferably 100 ppm by mass or more, and still more preferably 150 ppm by mass or more, and is also preferably 5000 ppm by mass or less, more preferably 2000 ppm by mass or less, and still more preferably 1500 ppm by mass or less, from the viewpoint of stably obtaining expanded beads having a desired bulk density and a small variation in cell diameter. That is, the blending amount of the cell controlling agent in the resin particles is preferably 50 to 5000 ppm by mass, more preferably 100 to 2000 ppm by mass, and still more preferably 150 to 1500 ppm by mass.

The expanded beads may contain other polymers such as resins other than the polypropylene-based resins and elastomers, as long as the object and the effect of the present invention are not impaired.

When the other polymer is contained, the content of the other polymer in the expanded beads is preferably 20 parts by mass or less, more preferably 10 parts by mass or less, and still more preferably 5 parts by mass or less with respect to 100 parts by mass of the polypropylene-based resin.

The expanded beads may have a fusion-bonding layer on the surface thereof for enhancing the fusion bonding properties between the expanded beads during in-mold molding. The fusion-bonding layer may be present on the entire surface or a part of the surface of the expanded beads. Examples of the resin constituting the fusion-bonding layer include a crystalline polyolefin-based resin having a melting point lower than the melting point of the polypropylene-based resin which is the base resin of the expanded beads, an amorphous polyolefin-based resin having a softening point lower than the melting point of the polypropylene-based resin which is the base resin of the expanded beads, and an adhesive resin such as a urethane resin.

The method of forming the fusion-bonding layer on the surface of the expanded beads is not particularly limited, and examples thereof include a method of expanding resin particles having a fusion-bonding layer and a method of adhering a fusion-bonding layer to expanded beads after the expanded beads are obtained. **In** the case of obtaining expanded beads by expanding resin particles having a fusion-bonding layer, it is preferred to employ a method of laminating a fusion-bonding layer on the surface of resin particles by co-extrusion when granulating the resin particles.

[Method for Producing Expanded Beads]

The expanded beads of the present invention can be produced, for example, by discharging polypropylene-based resin particles containing a blowing agent and a hindered amine-based compound, which are dispersed in an aqueous medium in a container, together with the aqueous medium from the container into an atmosphere having a pressure lower than the pressure in the container to expand (foam) the resin particles. An example of a suitable production method is shown below.

A preferred method for producing the expanded beads of the present invention is a method for producing expanded beads by using a polypropylene-based resin having a degree of crystallinity of 45% or less as a base resin and expanding resin particles containing a hindered amine-based compound, in which the hindered amine-based compound has a structure represented by the following formula (I), the content of the hindered amine-based compound in the expanded beads is 0.01% by mass or more and 4% by mass or less, and the resin particles containing a blowing agent, which are dispersed in an aqueous medium in a container, are discharged together with the aqueous medium from the container into an atmosphere having a pressure lower than the pressure in the container to expand (foam) the resin particles.

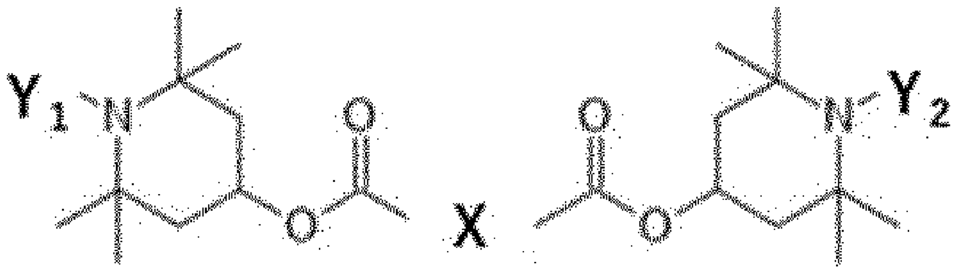

(I)

in which X represents an alkylene group, and $Y_1$ and $Y_2$ each independently represent a hydrocarbon group or a hydrocarbon group bonded via an oxygen atom.

<Production of Resin Particles>

The resin particles used in the production of the expanded beads of the present invention can be produced, for example, as follows. First, the polypropylene-based resin, the hindered amine-based compound, and other additives such as a cell controlling agent, a pigment, and an ultraviolet light absorber, which are added as necessary, are supplied to an extruder, heated, and kneaded to obtain a resin melt. Next, the resin melt is extruded from the extruder and pelletized. As the pelletizing method, methods such as a strand cutting method, a hot cutting method, and an underwater cutting method can be adopted. In this manner, the resin particles can be obtained.

The average mass per resin particle (arithmetic mean value per particle obtained by measuring the mass of 200 resin particles randomly selected) is preferably 0.1 mg or more, more preferably 0.3 mg or more, and still more preferably 0.5 mg or more, and is also preferably 10 mg or less, more preferably 5 mg or less, still more preferably 3 mg or less, and yet still more preferably 2 mg or less. That is, the average mass per resin particle is preferably 0.1 to 10 mg, more preferably 0.3 to 5 mg, still more preferably 0.5 to 3 mg, and yet still more preferably 0.5 to 2 mg. In addition, the outer shape of the resin particles is not particularly limited as long as the desired object of the present invention can be achieved, and is preferably a cylindrical shape.

When the outer shape of the resin particles is a cylindrical shape, the particle diameter (length in the extrusion direction) of the resin particles is preferably 0.1 to 3.0 mm and more preferably 0.3 to 1.5 mm. The ratio (L/D) of the length L of the resin particle in the extrusion direction to the length (diameter of the resin particle) D of the resin particle in the direction perpendicular to the extrusion direction is preferably 0.5 to 5.0, and more preferably 1.0 to 3.0.

In the strand cutting method, the particle diameter, L/D, and average mass of the resin particles can be adjusted by appropriately changing the extrusion speed, take-up speed, and cutter speed when extruding the resin melt.

<Production of Expanded Beads>

In a preferred method for producing expanded beads, the method includes, as a first step, a dispersion step of dispersing resin particles containing a hindered amine-based compound and other additives added as necessary in an aqueous medium containing an inorganic dispersant in a container such as a pressure vessel.

As a dispersing medium for dispersing the resin particles in the pressure vessel, an aqueous dispersing medium is used. The aqueous dispersing medium is a dispersing medium containing water as a main component. The proportion of water in the aqueous dispersing medium is preferably 70% by mass or more, more preferably 80% by mass or more, still more preferably 90% by mass or more, and may be 100% by mass. Examples of the dispersing medium other than water in the aqueous dispersing medium include ethylene glycol, glycerin, methanol, and ethanol.

A dispersant is preferably added to the aqueous medium so that the resin particles heated in the container are not fusion-bonded to each other. The dispersant may be any dispersant as long as it prevents the resin particles from fusion bonding in the container, and both an organic dispersant and an inorganic dispersant can be used, but an inorganic dispersant is preferable, and a fine particulate inorganic dispersant is more preferable from the viewpoint of ease of handling. Examples thereof include natural or synthetic clay minerals such as kaolin, mica, and clay, aluminum oxide, titanium oxide, basic magnesium carbonate, basic zinc carbonate, calcium carbonate, and iron oxide. Among these, natural or synthetic clay minerals are preferable. The dispersant may be used alone or in combination of two or more kinds thereof. The addition amount of the dispersant is preferably 0.001 to 5 parts by mass with respect to 100 parts by mass of the resin particles.

Depending on the type of the hindered amine-based compound blended in the resin particles, the inorganic dispersant in the dispersing medium is likely to adhere to the surface of the resin particles, and the amount of the inorganic dispersant adhering to the surface of the obtained expanded beads increases, whereby the fusion bonding between the expanded beads may be deteriorated during in-mold molding. On the other hand, in the present invention, by using the

specific hindered amine-based compound, it is possible to obtain expanded beads in which the expanded beads are favorably fusion bonded to each other even under a relatively low molding pressure condition and the expanded beads molded article can be produced in a wide molding pressure range. Further, a molded article having a good fusion bond state and weather resistance over a long period of time can be obtained.

When a dispersant is used, an anionic surfactant such as sodium dodecylbenzenesulfonate, sodium alkylsulfonate, or sodium oleate, or aluminum sulfate is preferably used in combination as a dispersing aid. The addition amount of the dispersing aid is preferably 0.001 to 1 part by mass with respect to 100 parts by mass of the resin particles.

**In** the method for producing expanded beads, it is preferable to include a blowing agent addition step of adding a blowing agent to the aqueous medium after the dispersion step. The blowing agent for use for expanding (foaming) the resin particles is preferably a physical blowing agent. Examples of the physical blowing agent include an inorganic physical blowing agent and an organic physical blowing agent. Examples of the inorganic physical blowing agent include carbon dioxide, air, nitrogen, helium, and argon. Examples of the organic physical blowing agent include an aliphatic hydrocarbon such as propane, n-butane, i-butane, n-pentane, i-pentane, and hexane, a cyclic aliphatic hydrocarbon such as cyclopentane and cyclohexane, and a halogenated hydrocarbon such as ethyl chloride, 2,3,3,3-tetrafluoropropene, trans-1,3,3,3-tetrafluoropropene, and trans-1-chloro-3,3,3-trifluoropropene. The blowing agent may be used alone, or a mixture of two or more kinds thereof may be used. It is also possible to use a mixture of an inorganic physical blowing agent and an organic physical blowing agent. Among these, the blowing agent is preferably an inorganic physical blowing agent, and more preferably carbon dioxide, from the viewpoint of the load on the environment and the handleability.

Although depending on the type of the blowing agent and the desired bulk density of the expanded beads, the amount of the blowing agent added is preferably about 0.1 to 30 parts by mass, and more preferably 0.5 to 15 parts by mass, relative to 100 parts by mass of the resin particles.

Resin particles containing a blowing agent can be obtained by the blowing agent addition step. **In** the blowing agent addition step, for example, the resin particles can be impregnated with the blowing agent by dispersing the resin particles in an aqueous dispersing medium in a pressure vessel, injecting the blowing agent into the pressure vessel, heating and pressurizing the pressure vessel, and holding the pressure vessel at a predetermined temperature and pressure.

**In** a preferable method for producing the expanded beads, the method includes, after the blowing agent addition step, an expanding (foaming) step of discharging the polypropylene-based resin particles containing the blowing agent from the container together with the aqueous medium to expand (foam) the polypropylene-based resin particles.

The pressure (internal pressure) in the pressure vessel during expanding is preferably 0.5 MPa(G) or more, and more preferably 0.8 MPa(G) or more, and is also preferably 4 MPa(G) or less, and more preferably 3 MPa(G) or less. Note that G in the unit indicates gauge pressure. The pressure in the pressure vessel can be adjusted by adding a blowing agent into the closed vessel.

**In** addition, it is preferable to raise the temperature to preferably 100 to 200°C and more preferably 130 to 160°C, hold the temperature for about 5 to 30 minutes, and then discharge the resin particles containing the blowing agent from the pressure vessel into an atmosphere having a pressure lower than the pressure in the pressure vessel (for example, under atmospheric pressure) to expand the resin particles.

The expanded beads having a crystal structure in which an intrinsic peak and a high-temperature peak appear in the first DSC curve can be produced, for example, in the following manner.

First, the resin particles dispersed in the dispersing medium in the pressure vessel are heated to a temperature of (melting point of polypropylene-based resin constituting resin particles - 15°C) to (melting point of polypropylene-based resin constituting resin particles + 10°C), and are held at this temperature for a sufficient time, preferably about 10 to 60 minutes (holding step). Subsequently, the resin particles having undergone the holding step are expanded, whereby expanded beads showing the above-described melting peak can be obtained.

**In** the production of the expanded beads, the resin particles having undergone the holding step may be prepared in advance, and the expanded beads may be obtained by expanding the resin particles having undergone the holding step. Alternatively, for example, the holding step may be performed on resin particles as a part of the dispersion step or the blowing agent addition step, and the resin particles having undergone the holding step may be expanded to obtain expanded beads.

From the viewpoint of increasing the productivity of the expanded beads, it is preferable to obtain the expanded beads exhibiting the above-described melting peak by heating the resin particles dispersed in the dispersing medium in the pressure vessel in the presence of the blowing agent to perform the holding step, and then discharging the contents of the pressure vessel from the inside of the pressure vessel under a pressure atmosphere lower than the pressure in the pressure vessel to expand the resin particles.

The expanded beads obtained as described above may be pressurized with air to increase the pressure (internal pressure) in the cells of the expanded beads, and then heated with steam or the like to be expanded (two-stage expanding) to obtain expanded beads having a high expanding ratio (low bulk density).

[Expanded Beads Molded Article]

The expanded beads molded article of the present invention (hereinafter, also simply referred to as "expanded beads molded article" or "molded article") is an in-mold molded article of expanded beads, and is formed by in-mold molding of the expanded beads. Specifically, the expanded beads molded article is obtained by in-mold molding of expanded beads containing a polypropylene-based resin as a base resin and a hindered amine-based compound, in which the polypropylene-based resin has a degree of crystallinity of 45% or less, the hindered amine-based compound has a structure represented by the following formula (I), and a content of the hindered amine-based compound in the expanded bead is 0.01% by mass or more and 4% by mass or less.

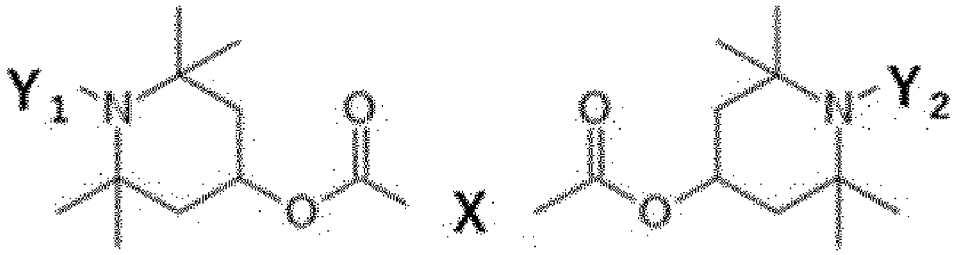

(I)

in which X represents an alkylene group, and $Y_1$ and $Y_2$ each independently represent a hydrocarbon group or a hydrocarbon group bonded via an oxygen atom.

The expanded beads molded article is an in-mold molded article of the expanded beads, and is preferably obtained by in-mold molding of the expanded beads. The in-mold molding method can be performed by filling a mold with the expanded beads and performing heat molding using a heating medium such as steam. To be more specific, by introducing a heating medium such as steam into the mold after the mold is filled with the expanded beads, the expanded beads are secondarily expanded by heating and are fusion bonded to each other to obtain an expanded beads molded article in which the shape of the molding space is shaped. As a method of filling the mold with the expanded beads, a known method can be adopted. Examples of the filling of the expanded beads into the mold include a cracking filling method in which the mold is opened in advance to expand the molding space before the expanded beads are filled into the mold, and the expanded beads are compressed by closing the mold after filling (for example, JP S46-38359 B), and a pressurizing filling method in which the expanded beads are pressurized in advance with a pressurized gas such as air to increase the pressure inside the cells of the expanded beads, the pressure inside the expanded beads is adjusted to a pressure 0.01 to 0.3 MPa higher than the atmospheric pressure, and then the expanded beads are filled into the mold under atmospheric pressure or reduced pressure (for example, JP S51-22951 B). Alternatively, the expanded beads can be molded by a pressure molding method in which a heating medium such as steam is supplied into a mold to thermally fusion bond the expanded beads (for example, JP S51-22951 B). In addition, the mold can be filled with the expanded beads by a compression filling method (JP H4-46217 B) in which a mold pressurized to atmospheric pressure or higher by a compressed gas is filled with the expanded beads pressurized to the pressure or higher. In addition, the expanded beads can also be filled by an atmospheric pressure filling method in which the expanded beads having a high secondary expanding force obtained under special conditions are filled in a cavity of a mold under atmospheric pressure or reduced pressure (JP H6-49795 B), a method in which the above-described methods are combined (JP H6-22919 B), or the like. In addition, as a heating method using steam or the like, heat molding can be performed by a method in which heating methods such as one way heating, reverse one way heating, and main heating are appropriately combined according to a known method.

<Density>

The density of the expanded beads molded article is preferably 10 kg/$m^3$ or more, more preferably 20 kg/$m^3$ or more, and still more preferably 30 kg/$m^3$ or more, and is also preferably 500 kg/$m^3$ or less, more preferably 200 kg/$m^3$ or less, still more preferably 100 kg/$m^3$ or less, and yet still more preferably 70 kg/$m^3$ or less, from the viewpoint of stably obtaining an expanded beads molded article which is lightweight and excellent in tensile physical properties. That is, the density of the expanded beads molded article is preferably 10 to 500 kg/$m^3$, more preferably 20 to 200 kg/$m^3$, still more preferably 20 to 100 kg/$m^3$, and yet still more preferably 30 to 100 kg/$m^3$.

The density of the expanded beads molded article is calculated by dividing the mass of the expanded beads molded article by the volume calculated based on the dimensions. Specifically, the density can be measured by the method described in Examples.

<Ratio (Tensile Strength/Density)>

The ratio of the tensile strength of the expanded beads molded article to the density of the expanded beads molded article (tensile strength/density) is preferably 10 kPa/[kg/$m^3$] or more, more preferably 13 kPa/[kg/$m^3$] or more, and still more preferably 15 kPa/[kg/$m^3$] or more, and the upper limit thereof is not limited, but is practically 30 kPa/[kg/$m^3$] or less, and preferably 25 kPa/[kg/$m^3$] or less. That is, the ratio (tensile strength/density) of the molded article is preferably 10 to 30 kPa/[kg/$m^3$], more preferably 13 to 25 kPa/[kg/$m^3$], and still more preferably 15 to 25 kPa/[kg/$m^3$]. When the ratio of the tensile strength of the expanded beads molded article to the density of the expanded beads molded article is within the above range, the molded article has a good fusion bond state and excellent tensile physical properties, and stably exhibits weather resistance over a long period of time, which is preferable.

The tensile strength of the expanded beads molded article is related to the fusion bond state between the expanded beads constituting the molded article, and it means that when the densities of the molded articles are the same, the larger a tensile strength is, the higher fusion bonding properties between the expanded beads constituting the molded article is. On the other hand, since the tensile strength of the molded article also depends on the density of the molded article, the fusion bond state of the molded article can be suitably evaluated by adopting the ratio of the tensile strength of the expanded beads molded article to the density.

The tensile strength of the expanded beads molded article can be measured in accordance with JIS K 6767:1999, and can be measured by, for example, a method described in Examples. The tensile strength means the maximum nominal stress generated until a test piece is cut in a tensile test. In addition, the ratio of the tensile strength to the density (tensile strength per unit density) can be calculated by dividing the value of the measured tensile strength by the value of the density.

<Tensile Elongation>

The tensile elongation of the expanded beads molded article is preferably 15% or more, more preferably 18% or more, and still more preferably 20% or more. The upper limit thereof is not limited, but is practically 50% or less, and preferably 40% or less. That is, the tensile elongation of the expanded beads molded article is preferably 15% to 50%, more preferably 18% to 40%, and still more preferably 20% to 35%. When the tensile elongation of the expanded beads molded article is within the above-described range, the fusion bond state between the expanded beads is good, and in particular, the molded article in which the expanded beads inside the molded article are also well fusion bonded is obtained, which is preferable. As a result, the molded article has excellent durability, which is preferable.

The tensile elongation of the expanded beads molded article can be measured in accordance with JIS K 6767:1999, and can be measured by, for example, a method described in Examples. The tensile elongation means an elongation rate of a test piece when the test piece is cut in a tensile test.

The expanded beads molded article of the present invention is excellent in weather resistance over a long period of time and excellent in tensile physical properties. Therefore, the expanded beads molded article of the present invention can be used as an impact absorbing material, a heat insulating material, various packaging materials and the like for applications such as food transport containers, packaging and cushioning materials for electric and electronic components, vehicle members such as automobile bumpers, building members such as residential heat insulating materials, miscellaneous goods, furniture, and sports goods.

EXAMPLES

Next, the present invention will be described in more detail by Examples, but the present invention is not limited in any way by these Examples.

[Measurements and Evaluations]

The following measurements and evaluations were performed on the polypropylene-based resins, the hindered amine-based compounds, the ultraviolet light absorbers, the expanded beads, and the expanded beads molded article used in Examples and Comparative Examples. The various evaluations of the expanded beads or the expanded beads molded article were carried out after conditioning the expanded beads or the expanded beads molded article by allowing them to stand for 2 days under conditions of 50% RH, 23°C, and 1 atm.

<Polypropylene-based Resin>

(Degree of Crystallinity)

The degree of crystallinity of the polypropylene-based resin was calculated by dividing the quantity of heat of fusion of the polypropylene-based resin by the quantity of heat of fusion (207 J/g) of a complete crystal body of polypropylene (unit: %).

The quantity of heat of fusion of the polypropylene-based resin was obtained from a DSC curve obtained by performing differential scanning calorimetry (DSC) based on JIS K 7122:1987. Specifically, as a condition adjustment of a test piece, "(2) When the melting temperature is measured after a certain heat treatment" was adopted, the test piece was heated from 23°C to 200°C at a heating rate of 10°C/min under the condition that the nitrogen inflow amount was 30 mL/min, then, the test piece was maintained at the temperature for 10 minutes, cooled to 23°C at a cooling rate of 10°C/min, and heated again to 200°C at a heating rate of 10°C/min, thereby obtaining a DSC curve (DSC curve at the time of the second heating). A point at a temperature of 80°C on the obtained DSC curve at the time of the second heating was defined as $\alpha$, and a point on the DSC curve corresponding to the melting end temperature was defined as $\beta$. The area of a portion surrounded by the DSC curve in the section between the point $\alpha$ and the point $\beta$ and the line segment ($\alpha$-$\beta$) was measured, and this was taken as the quantity of heat of fusion of the polypropylene-based resin.

(Melting Point)

The melting point of the polypropylene-based resin was measured in accordance with JIS K 7121:2012 using the polypropylene-based resin as a test piece. Specifically, as a condition adjustment of a test piece, "(2) When the melting temperature is measured after a certain heat treatment" was adopted, the test piece was heated from 23°C to 200°C at a heating rate of 10°C/min under the condition that the nitrogen inflow amount was 30 mL/min, then, the test piece was maintained at the temperature for 10 minutes, cooled to 23°C at a cooling rate of 10°C/min, and heated again to 200°C at a heating rate of 10°C/min, thereby obtaining a DSC curve (DSC curve at the time of the second heating). Next, the peak temperature of the melting peak in the DSC curve was determined, and this value was taken as the melting point of the polypropylene-based resin. When a plurality of melting peaks appear in the DSC curve, the temperature at the top of the melting peak having the highest height of the melting peak based on the baseline was adopted as the melting point.

(MFR)

The MFR of the polypropylene-based resin was measured based on JIS K 7210-1:2014 under the conditions of a temperature of 230°C and a load of 2.16 kg.

<Expanded Beads>

(Bulk Density)

The bulk density of the expanded beads was determined by filling a group of expanded beads having a bulk volume of about 500 $cm^3$ into a measuring cylinder and lightly tapping the floor surface with the bottom surface of the measuring cylinder several times to stabilize the filling height of the group of expanded beads in the measuring cylinder. The bulk volume of the group of expanded beads indicated by the scale of the measuring cylinder was read and was taken as V1 [L]. Next, the mass of the group of expanded beads was measured and was taken as W1 [g].

The bulk density of the expanded beads was determined by dividing the mass W1 [g] of the expanded beads by the volume V1 (W1/V1) and converting the unit to [$kg/m^3$].

(Average Cell Diameter)

The average cell diameter of the expanded beads was measured as follows. Thirty expanded beads were randomly selected from the group of expanded beads. The expanded beads were cut so as to pass through the center portion thereof and divided into two portions, and an enlarged photograph of one cross section was taken for each portion. In each cross-sectional photograph, four line segments were drawn from the outermost surface of the expanded bead through the center portion to the outermost surface on the opposite side of the expanded bead so that the angles formed by the two adjacent line segments were equal. The number of cells intersecting each line segment was measured, and the total length of the four line segments was divided by the total number of cells intersecting the line segments to obtain the average cell diameter of each expanded bead. The average cell diameter of the expanded beads was obtained by arithmetically averaging these values.

(Quantity of Heat of Fusion and Quantity of Heat of Fusion at High-Temperature Peak)

The quantity of heat of fusion and the quantity of heat of fusion at the high-temperature peak of the expanded beads were measured by heat flux differential scanning calorimetry in accordance with JIS K 7122:1987. Specifically, about 2 mg of the expanded beads were collected, and the temperature rise was measured at 10°C/min from 23°C to 200°C by a differential thermal scanning calorimeter (DSC7020, manufactured by Hitachi High-Tech Science Corporation) to obtain a DSC curve having one or more melting peaks. In the following description, the intrinsic peak inherent to the resin is referred to as A, and the high-temperature peak appearing on the higher temperature side is referred to as B.

A straight line (α-β) was drawn by connecting a point α corresponding to 80°C on the DSC curve and a point β on the DSC curve corresponding to the melting end temperature T of the expanded beads. The melting end temperature T is an end point on the high-temperature side in the high-temperature peak B, and refers to an intersection point of the high-temperature peak and the high-temperature side baseline. Next, a straight line parallel to the vertical axis of the graph was drawn from a point γ on the DSC curve corresponding to the valley between the intrinsic peak A and the high-temperature peak B, and a point intersecting with the straight line (α-β) was defined as δ.

The area of the portion surrounded by the curve of the high-temperature peak B portion of the DSC curve, the line segment (δ-β), and the line segment (γ-δ) was determined, and the quantity of heat of fusion of the high-temperature peak was calculated from this area. Further, the area of the portion surrounded by the curve of the intrinsic peak A portion of the DSC curve, the curve of the high-temperature peak B portion, and the line segment (α-β) was determined, and the quantity of heat of fusion (total quantity of heat of fusion) of the expanded beads was calculated from this area. The quantity of heat of fusion of the expanded beads and the quantity of heat of fusion of the high-temperature peak were measured for three different test pieces, and the arithmetic average value of the obtained values was taken as the quantity of heat of fusion of the expanded beads and the quantity of heat of fusion of the high-temperature peak.

(Degree of Crystallinity)

The degree of crystallinity of the expanded beads was calculated by dividing the quantity of heat of fusion (total quantity of heat of fusion) of the expanded beads by the quantity of heat of fusion (207 J/g) of a complete crystal body of polypropylene (unit: %).

(Quantity of Heat of Fusion at High-Temperature Peak of Surface Layer Portion of Expanded Beads (ΔHs) and Quantity of Heat of Fusion at High-Temperature Peak of Inner Portion of Expanded Beads (ΔHi))

In each of Examples and Comparative Examples, a portion included in a range from the surface of the expanded bead to 200 μm toward the center of gravity of the expanded bead was cut out from a plurality of expanded beads, and about 2 mg of a sample was prepared. This sample was referred to as a surface layer portion of the expanded beads.

In each of Examples and Comparative Examples, an inner portion of the expanded beads was cut out from a plurality of expanded beads so as not to include the surface layer portion, and about 2 mg of a sample was prepared. This sample was referred to as an inner portion of the expanded beads.

For each of the surface layer portion of the expanded beads and the inner portion of the expanded beads, heat flux differential scanning calorimetry was carried out in the same manner as that for the above-mentioned <Quantity of Heat of Fusion and Quantity of Heat of Fusion at High-Temperature Peak of Expanded Beads> to obtain a quantity of heat of fusion at the high-temperature peak.

The quantity of heat of fusion at the high-temperature peak of the surface layer portion of the expanded beads was referred to as ΔHs, and the quantity of heat of fusion at the high-temperature peak of the inner portion of the expanded beads was as ΔHi. A value of 0.86 times ΔHi and a value of 1.2 times ΔHi were calculated and represented by ΔHi × 0.86 and ΔHi × 1.2, respectively. The results are shown in Tables 1 and 2.

(Steam Pressure Range (Molding Pressure Range in which Good Product can be Molded))

An expanded beads molded article was molded by changing the molding pressure (molding steam pressure) by 0.01 MPa in the method of <Production of Expanded Beads Molded Article> described later, and then, in-mold moldability was evaluated for the items of fusion bonding properties, surface appearance (degree of gaps (voids)), and recoverability (recoverability of expansion or shrinkage after in-mold molding) of the obtained molded article. The molded article that reached the criteria shown below was regarded as acceptable, and the steam pressure at which all the items were regarded as acceptable was regarded as the steam pressure range. As the width from the lower limit value to the upper limit value of the moldable steam pressure is wider, the moldable range is wider, which is preferable.

<<Fusion Bonding Properties>>

The obtained expanded beads molded article was bent and fractured, and the number (C1) of the expanded beads present in the fracture surface and the number (C2) of the fractured expanded beads were determined. The ratio of the number of the fractured expanded beads to the number of the expanded beads (C2/C1 × 100) was calculated as the material fracture rate. The above-mentioned measurement was performed five times using different test pieces, and the respective material fracture rates were determined. When the material fracture rate obtained by arithmetically averaging the measurement results was 80% or more, the test piece was judged to be acceptable, and when the material fracture rate was less than 80%, the test piece was judged to be unacceptable.

<<Surface Appearance>>

A square of 100 mm × 100 mm was drawn in a central portion of a plate surface of the obtained expanded beads molded article, and a line was drawn on a diagonal line from one corner of the square. The number of voids (gaps) having a size of 1 mm × 1 mm or more on the line was counted. A case where the number of voids was less than 5 and there was no unevenness on the surface was regarded as acceptable, and other cases were regarded as unacceptable.

<<Recoverability>>

**In** the expanded beads molded article having a flat plate shape having a length of 250 mm, a width of 200 mm, and a thickness of 50 mm obtained by the in-mold molding, the thicknesses in the vicinity of the four corners (10 mm inside from the corners in the central direction of the plate surface) and the thickness of the central portion of the molded article (an intersection portion between a line bisecting the molded article in the longitudinal direction and a line bisecting the molded article in the lateral direction) were respectively measured. Next, the ratio (%) of the thickness of the central portion to the thickness of the thickest portion in the vicinity of the four corners was calculated. A case where the ratio was 95% or more was regarded as acceptable, and a case where the ratio was less than 95% was regarded as unacceptable.

<Expanded Beads Molded Article>

(Density)

The density of the expanded beads molded article was measured as follows. First, the expanded beads molded article was left to stand for 2 days under conditions of 50% RH, 23°C, and 1 atm. Next, the mass thereof was measured, and this was taken as W [g]. Next, the volume V [$cm^3$] of the expanded beads molded article was measured based on the dimensions of the expanded beads molded article. The density of the expanded beads molded article was determined by dividing the mass W [g] of the expanded beads molded article by the volume V (W/V) and converting the unit to [$kg/m^3$].

(Tensile Test)

The tensile test of the expanded beads molded article was performed in accordance with JIS K 6767:1999 under the following conditions.

A cut-out piece was prepared from the expanded beads molded article or the expanded beads molded article after irradiation with light under the light irradiation conditions for weather resistance evaluation described later using a vertical slicer so that the skin portion on the irradiated surface side remained. From this cut-out piece, a dumbbell No. 1 test piece (test length of a dumbbell 40 mm, width 10 mm, thickness 10 mm) was prepared using a punching mold. The test piece was subjected to a tensile test at a tensile speed of 500 mm/min, and the maximum load during the test and the test length of a dumbbell at the time of breakage were measured. The maximum nominal stress in the tensile test was taken as the tensile strength, and the elongation at break of the test piece ([test length of a dumbbell at the time of breakage - test length of a dumbbell before the test] ÷ test length of a dumbbell before the test × 100) was taken as the tensile elongation. As a measuring apparatus, TENSILON Universal Testing Machine (manufactured by Orientec Co., Ltd.) was used. The tensile strength per density (the ratio of the tensile strength of the expanded beads molded article to the density of the expanded beads molded article [tensile strength/density]) was determined by dividing the maximum tensile strength by the density.

(Weather Resistance Evaluation)

The molded article was irradiated with light under the following conditions in accordance with JIS K 7350-2:2008. The weather resistance of the expanded beads molded article was evaluated by measuring the tensile physical properties

(tensile strength, tensile elongation, and tensile strength per density) of the molded article after irradiation with light by a tensile test and observing a change in appearance (change before irradiation with light and after irradiation with light).

<<Light Irradiation Condition>>

Apparatus used: EYE Super Xenon Tester XER-W83, manufactured by Iwasaki Electric Co., Ltd.

Light source: Xenon arc lamp
Filter: Inner filter: quartz glass, outer filter: borate glass
Irradiance: 120 $W/m^2$
Irradiation time: 330 hours (corresponding to sunlight 0.5 years), or 1,980 hours (corresponding to sunlight 3 years)
Black panel temperature: 63°C
Spray cycle: water spraying for 18 minutes in 120 minutes (after irradiation with light for 102 minutes, irradiation with light and water spraying for 18 minutes)
In-chamber humidity: 50%
Size of test piece: 150 mm × 70 mm × 10 mm

<<Appearance Evaluation>>

The expanded beads molded article irradiated with light as described above was evaluated according to the following criteria, using the appearance of the molded article before irradiation with light as a standard.

A: No change in appearance. In addition, no adhesion of powder is observed on the hand when the molded article surface is touched.
B: Change in appearance cannot be visually confirmed, but powder generated by powdering of the resin adheres to the hand when the molded article surface is touched.
C: Powdering (chalking) of the resin is clearly observed, or powder generated by powdering of the resin significantly adheres to the hand when the molded article surface is touched.

[Raw Materials]

Raw materials used in Examples and Comparative Examples are shown below.

<Polypropylene-based Resin>

PP1: ethylene-propylene-butene random copolymer, ethylene content: 4.3% by mass, butene content: 3.0% by mass, degree of crystallinity: 38%, melting point: 140°C, MFR: 7 g/10 min
PP2: ethylene-propylene random copolymer, ethylene content: 3.1% by mass, degree of crystallinity: 36%, melting point: 141°C, MFR: 7 g/10 min
PP3: ethylene-propylene random copolymer, ethylene content: 3.4% by mass, degree of crystallinity: 30%, melting point: 139°C, MFR: 7 g/10 min
PP4: propylene homopolymer, degree of crystallinity: 50%, melting point: 162°C, MFR: 18 g/10 min

<Hindered Amine-based Compound>

HALS1: an NOR-type hindered amine, trade name "Tinuvin 123", manufactured by BASF SE, molecular weight 737, in the formula (I), X represents an octylene group, and $Y_1$ and $Y_2$ each represent an octyl group bonded via an oxygen atom.

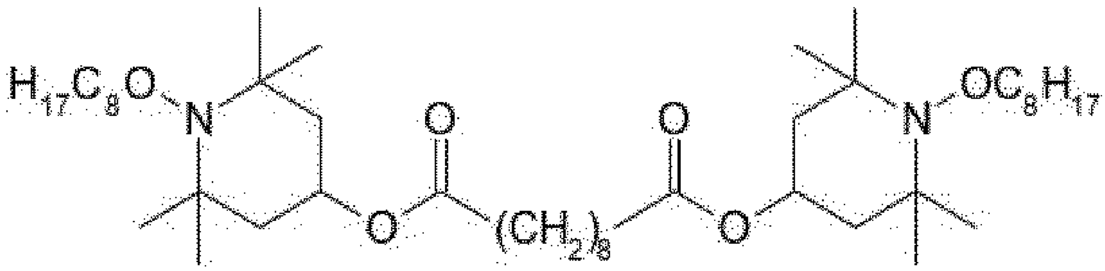

HALS2: an NR-type hindered amine, trade name "Tinuvin 765", manufactured by BASF SE, molecular weight 509, in the formula (I), X represents an octylene group, and $Y_1$ and $Y_2$ each represent a methyl group.

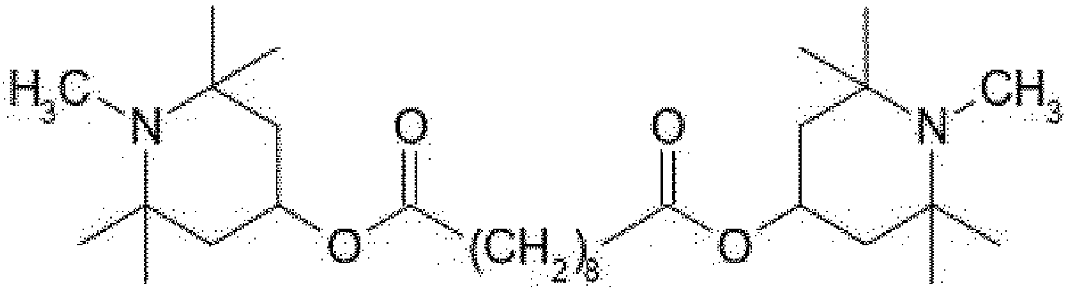

HALS3: an NH-type hindered amine, trade name "Tinuvin 770", manufactured by BASF SE, molecular weight 481, in the formula (I), X represents an octylene group, and $Y_1$ and $Y_2$ each represent a hydrogen atom.

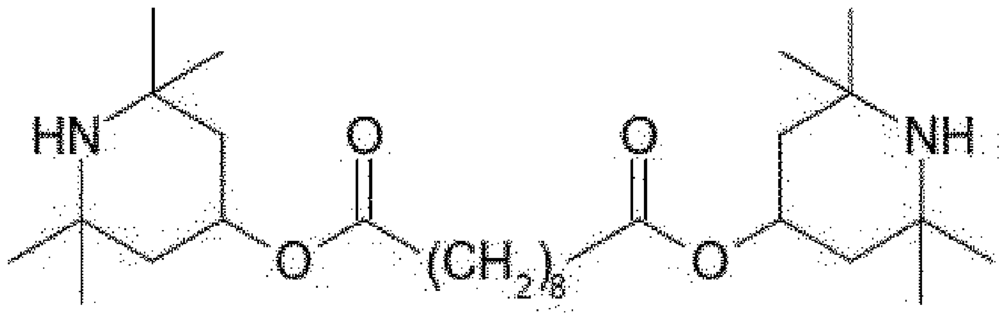

HALS4: an NH-type hindered amine, trade name "Uvinul 4050", manufactured by BASF SE, molecular weight 451

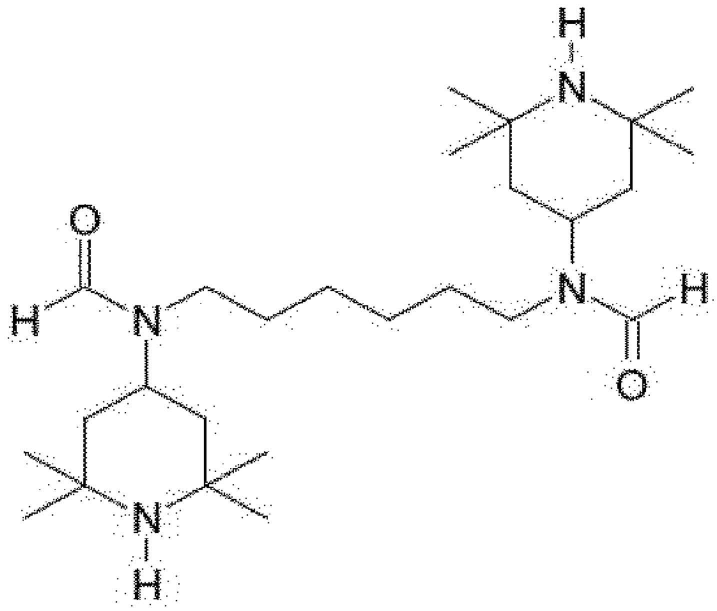

HALS5: an NH-type hindered amine, trade name "Chimassorb 944", manufactured by BASF SE, number-average molecular weight in terms of polystyrene 2550

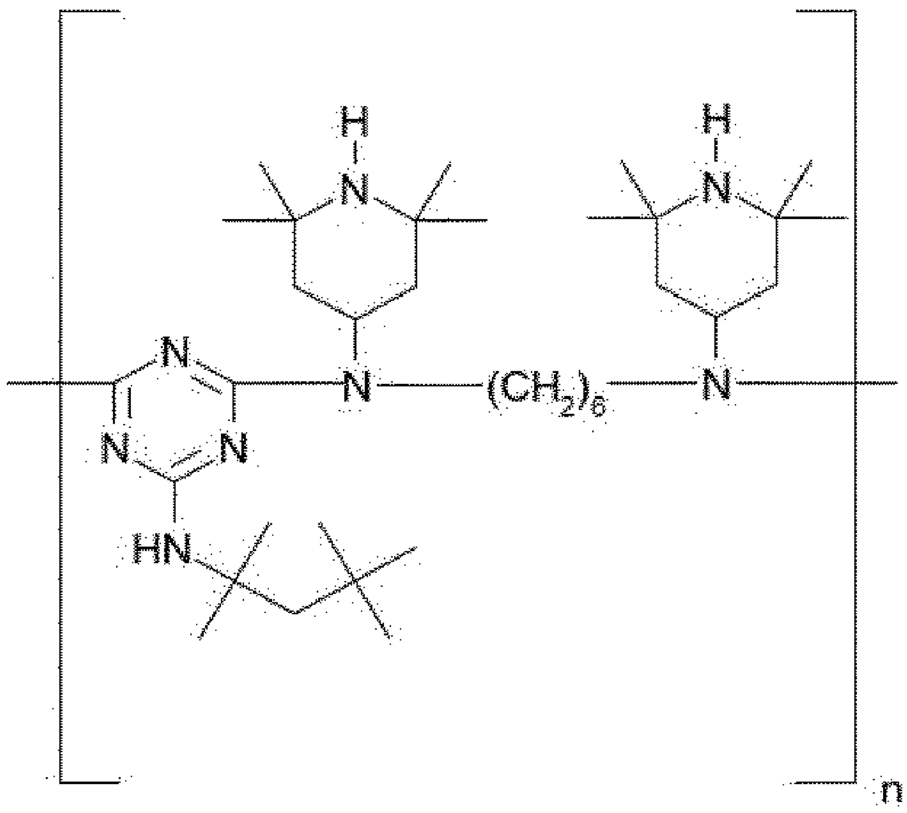

<Ultraviolet Light Absorber>

UVA1: a benzoate-based ultraviolet light absorber, trade name "Tinuvin 120", 2,4-dit-butylphenyl 3,5-di-t-butyl-4-hydroxybenzoate, manufactured by BASF SE, molecular weight 439, melting point 195°C

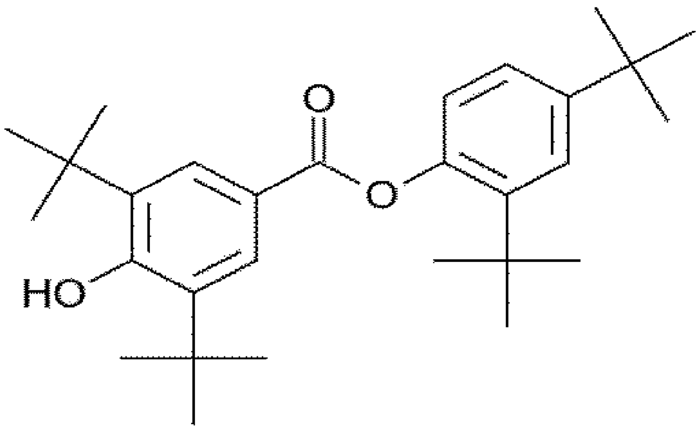

UVA2: a triazine-based ultraviolet light absorber, trade name "Tinuvin 1577", 2-[4,6-diphenyl-1,3,5-triazin-2-yl]-5-(hexyloxy)phenol, manufactured by BASF SE, molecular weight 426, melting point 148°C

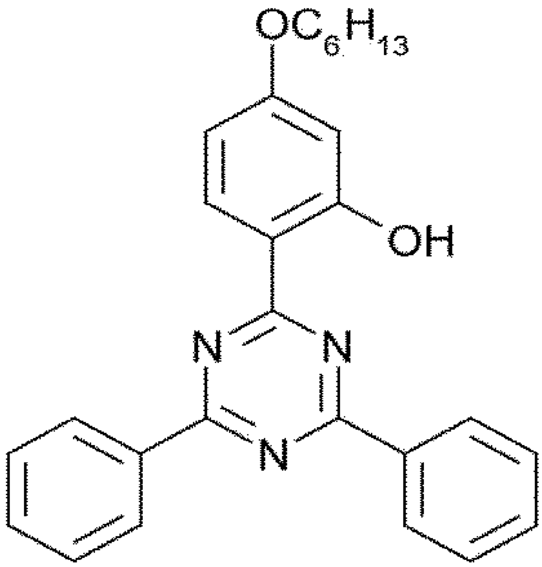

UVA3: a benzotriazole-based ultraviolet light absorber, trade name "Tinuvin 326", 2-t-butyl-6-(5-chloro-2H-benzotriazole-2-yl)-4-methylphenol, manufactured by BASF SE, molecular weight 316, melting point 140°C

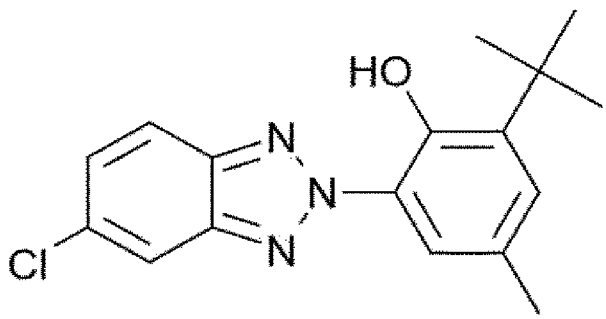

UVA4: a mixture of UVA1 and UVA2 (UVA1: UVA2 = 1:1)

[Production of Expanded Beads]

Examples 1 to 9 and Comparative Examples 2 to 9

An extruder having an inner diameter of 26 mm and equipped with a strand-forming die on the downstream side

was prepared. A resin shown in Table 1 or 2, a hindered amine-based compound shown in Table 1 or 2, zinc borate (arithmetic average particle diameter on a number basis: 7 mm) as a cell controlling agent, and carbon black (furnace black, primary particle diameter: 15 nm) were supplied to the extruder and melt-kneaded to form a resin melt. The respective additives were supplied such that the content of zinc borate in the expanded beads was 500 ppm by mass, the content of carbon black as an inorganic pigment in the expanded beads was the content shown in Table 1 or 2, and the content of the hindered amine-based compound in the expanded beads was the content shown in Table 1 or 2.

The obtained resin melt was extruded as a strand from the strand-forming die, and the extruded strand was water-cooled and cut with a pelletizer to obtain cylindrical resin particles having an average mass of 1.0 mg per one piece.

In a 5 L pressure vessel, 500 g of the resin particles, 3.5 L of water as a dispersing medium, 3 g of kaolin as a dispersant, and 0.2 g of sodium dodecylbenzenesulfonate (trade name: NEOGEN, manufactured by DKS Co., Ltd.) as a surfactant were charged.

Next, carbon dioxide was injected as a blowing agent into the pressure vessel, and the pressure vessel was pressurized to a gauge pressure of 2.5 MPa(G). Then, the contents of the pressure vessel were heated to an expanding temperature (146°C) at a temperature rising rate of 2°C/min while stirring the contents. Further, the contents were held at the same temperature for 15 minutes. The high-temperature peak heat quantity (obtained from the endothermic curve by DSC measurement) can be adjusted by the holding temperature and the holding time. Thereafter, the contents of the closed vessel were discharged under atmospheric pressure to obtain expanded beads. The measurement results of the physical properties of the obtained expanded beads are shown in Table 1 or 2. The "steam pressure range" in Tables 1 and 2 means a range of steam pressure at which the in-mold moldability of the expanded beads is excellent and a good product is obtained based on the above-described evaluation method.

[Production of Expanded Beads Molded Article]

The expanded beads were filled in a mold capable of forming a flat plate having a length of 250 mm × a width of 200 mm × a thickness of 50 mm, and heating was performed by the following heating method. First, steam was supplied to the mold in a state in which drain valves provided on both surfaces of the mold were opened to perform pre-heating (exhaust step). Thereafter, steam was supplied from one side of the mold to perform heating, and steam was further supplied from the other side of the mold to perform heating. Subsequently, steam was supplied from both sides of the mold at a predetermined molding heating steam pressure to heat (main heating). After completion of the main heating, the pressure was released, water cooling was performed until the pressure generated on the forming surface of the mold reached 0.04 MPa(G), and then the mold was opened and the expanded beads molded article was taken out. The obtained molded article was cured in an oven at 80°C for 12 hours to obtain an expanded beads molded article. The measurement results of the physical properties of the obtained expanded beads molded article are shown in Tables 1 and 2. In Examples 1 to 4, Comparative Examples 2 to 4, and Comparative Examples 7 to 9 in which a polypropylene-based resin having a relatively low degree of crystallinity was used, the steam pressure range of the expanded beads differed depending on the type of the hindered amine-based compound added. In addition, the expanded beads of Examples 1 to 4 containing the hindered amine-based compound having the structure represented by the formula (I) had a wider steam pressure range and excellent in-mold moldability than the expanded beads of Comparative Examples 2 to 4 and Comparative Examples 7 to 9 containing the hindered amine-based compound not having the structure represented by the formula (I).

Examples 10 to 15

Expanded beads and expanded beads molded articles were obtained in the same manner as in Example 1 except that the ultraviolet light absorber shown in Table 1 was added to have the content shown in Table 1. The measurement results of the physical properties of the obtained expanded beads and expanded beads molded articles are shown in Table 1.

Example 16

After the operation of the expanding step of Example 1, the following two-stage expanding step was performed. A pressurizable pressure vessel was filled with the expanded beads obtained in the expanding step of Example 1 after being cured at 60°C for 12 hours (hereinafter referred to as first-stage expanded beads), and the pressure in the pressure vessel was increased from normal pressure (atmospheric pressure) to pressurize the expanded beads to 0.6 MPa(G). The pressure within the cells of the expanded beads was increased by maintaining the pressurized state of the expanded beads for 12 hours. Thereafter, the first-stage expanded beads were taken out from the pressure vessel, and first-stage expanded beads in which the internal pressure of the cells of the expanded beads was 0.5 MPa(G) were obtained. The first-stage expanded beads were then supplied to a two-stage expanding apparatus. Steam was supplied to the apparatus to expand the first-stage expanded beads to obtain expanded beads with a bulk density of 27 kg/$m^3$ (two-stage expanded

beads). The measurement results of the physical properties of the obtained expanded beads are shown in Table 1.

The obtained expanded beads were placed in a pressurizable pressure vessel and pressurized to increase the pressure in the cells to 0.05 MPa(G). In-mold molding was performed in the same manner as in Example 1, except that the expanded beads were used instead of the expanded beads used in Example 1, and an expanded beads molded article was obtained. The measurement results of the physical properties of the obtained expanded beads molded article are shown in Table 1.

Example 17

Expanded beads and an expanded beads molded article were obtained in the same manner as in Example 16 except that the ultraviolet light absorber shown in Table 1 was added to have the content shown in Table 1. The measurement results of the physical properties of the obtained expanded beads and expanded beads molded articles are shown in Table 1.

Comparative Example 1

Expanded beads and an expanded beads molded article were obtained in the same manner as in Example 1, except that the hindered amine-based compound was not used. The measurement results of the physical properties of the obtained expanded beads and expanded beads molded article are shown in Table 2. When the obtained expanded beads molded article was irradiated with light for 1980 hours (equivalent to 3 years of sunlight), the sample disintegrated and measurement and evaluation could not be performed.

Comparative Examples 10 to 14

[Production of Expanded Beads]

A resin shown in Table 2, a hindered amine-based compound shown in Table 2, zinc borate as a cell controlling agent, and a master batch containing carbon black (ethylene-propylene rubber (ethylene content 60% by weight): carbon black = 60:40) were supplied to the extruder and melt-kneaded to form a resin melt. The respective additives were supplied such that the content of zinc borate in the expanded beads was 500 ppm by mass, the content of carbon black as an inorganic pigment in the expanded beads was 3% by mass, and the content of the hindered amine-based compound in the expanded beads was the content shown in Table 2.

The obtained resin melt was extruded as a strand from the strand-forming die, and the extruded strand was water-cooled and then cut with a pelletizer to obtain cylindrical resin particles having an average mass of 1 mg per one piece.

In a 5 L pressure vessel, 500 g of the resin particles, 3.5 L of water as a dispersing medium, 3 g of kaolin as a dispersant, 0.2 g of sodium dodecylbenzenesulfonate (trade name: NEOGEN, manufactured by DKS Co., Ltd.) as a surfactant, 0.05 g of aluminum sulfate as a dispersing aid, and 5 g of bis(4-t-butylcyclohexyl) peroxydicarbonate as an organic peroxide were charged. Next, carbon dioxide was injected as a blowing agent into the pressure vessel, and the pressure vessel was pressurized to a gauge pressure of 2.5 MPa(G), and the contents of the pressure vessel were heated to an expanding temperature (167°C) at a temperature rising rate of 2°C/min while stirring the contents. Further, the contents were held at the same temperature for 15 minutes. Thereafter, the contents of the pressure vessel were discharged under atmospheric pressure to obtain expanded beads. The obtained expanded beads were rinsed with water and centrifuged, then left to cure under atmospheric pressure at a temperature of 23°C for 48 hours. The measurement results of the physical properties of the obtained expanded beads are shown in Table 2. The "steam pressure range" in Table 2 means a range of steam pressure at which the in-mold moldability of the expanded beads is excellent and a good product is obtained based on the above-described evaluation method.

In Comparative Examples 10 to 14, good in-mold molded articles could not be obtained under low molding pressure conditions (specifically, steam pressure of 0.32 MPa(G) or less).

In addition, in Comparative Examples 10 to 14 in which a polypropylene-based resin having a relatively high degree of crystallinity was used, the steam pressure range of the expanded beads was the same regardless of the type of the hindered amine-based compound added.

[Production of Expanded Beads Molded Article]

Expanded beads molded articles were obtained in the same manner as in Example 1. The measurement results of the physical properties of the obtained expanded beads molded articles are shown in Table 2.

Table 1

| | | | | Examples 1 | 2 | 3 | 4 | 5 | 6 |
|---|---|---|---|---|---|---|---|---|---|
| Expanded beads | Type of resin | | | PP1 | | PP2 | | PP3 | |
| | Hindered amine-based compound | | Type | HALS1 | HALS2 | HALS1 | HALS2 | HALS1 | HALS2 |
| | | | Content (% by mass) | 0.8 | 0.8 | 0.8 | 0.8 | 0.8 | 0.8 |
| | Ultraviolet light absorber | | Type | - | | | | | |
| | | | Content (% by mass) | | | | | | |
| | Inorganic pigment | | Content (% by mass) | 3 | 3 | 3 | 3 | 3 | 3 |
| | Hindered amine-based compound/ Inorganic pigment | | | 0.3 | 0.3 | 0.3 | 0.3 | 0.3 | 0.3 |
| | Ultraviolet light absorber/ Hindered amine-based compound | | | - | | | | | |
| | Ultraviolet light absorber/Inorganic pigment | | | | | | | | |
| | Bulk density (kg/m$^3$) | | | 47 | 46 | 49 | 48 | 50 | 49 |
| | Average cell diameter (μm) | | | 82 | 80 | 87 | 84 | 74 | 72 |
| | Quantity of heat of fusion at high-temperature peak (J/g) | | | 14 | 14 | 13 | 13 | 17 | 17 |
| | Total quantity of heat of fusion (J/g) | | | 72 | 72 | 70 | 70 | 63 | 63 |
| | Degree of crystallinity (%) | | | 34 | 34 | 32 | 32 | 27 | 27 |
| | ΔHs (J/g) | | | 15 | 15 | 14 | 14 | 18 | 18 |
| | ΔHi (J/g) | | | 14 | 14 | 13 | 13 | 17 | 17 |
| | ΔHi × 0.86 (J/g) | | | 12 | 12 | 11 | 11 | 15 | 15 |
| | ΔHi × 1.2 (J/g) | | | 17 | 17 | 16 | 16 | 20 | 20 |
| | Steam pressure range (MPa(G)) | | | 0.28-0.30 | 0.28-0.30 | 0.30-0.32 | 0.30-0.32 | 0.28-0.30 | 0.28-0.30 |
| Expanded beads molded article | Density (kg/m$^3$) | | | 59 | 58 | 61 | 60 | 62 | 61 |
| | Before irradiation with light | | Tensile strength (kPa) | 1005 | 995 | 1055 | 1045 | 980 | 975 |
| | | | Tensile elongation (%) | 25 | 25 | 25 | 24 | 26 | 25 |
| | | | Tensile strength/density (kPa/[kg/m$^3$]) | 17 | 17 | 17 | 17 | 16 | 16 |
| | Weather resistance | After irradiation with light (corresponding to 0.5 y) | Appearance evaluation | A | A | A | A | A | A |
| | | After irradiation with light (corresponding to 3.0 y) | Tensile strength (kPa) | 980 | 970 | 1020 | 1000 | 950 | 940 |
| | | | Tensile strength Ratio before irradiation with light (%) | 98 | 97 | 97 | 96 | 97 | 96 |
| | | | Tensile elongation (%) | 24 | 24 | 24 | 23 | 25 | 24 |
| | | | Appearance evaluation | A | B | A | B | A | B |

| | | | | 7 | 8 | 9 | 10 | 11 | 12 |
|---|---|---|---|---|---|---|---|---|---|
| Expanded beads | Type of resin | | | PP1 | | | | | |
| | Hindered amine-based compound | | Type | HALS1 | | | | | |
| | | | Content (% by mass) | 0.8 | 0.2 | 0.2 | 0.8 | 0.8 | 0.8 |
| | Ultraviolet light absorber | | Type | - | | | UVA1 | UVA2 | UVA3 |
| | | | Content (% by mass) | | | | 0.8 | 0.8 | 0.8 |
| | Inorganic pigment | | Content (% by mass) | 0.1 | 3 | 6 | 3 | 3 | 3 |
| | Hindered amine-based compound/ Inorganic pigment | | | 8 | 0.07 | 0.03 | 0.3 | 0.3 | 0.3 |
| | Ultraviolet light absorber/ Hindered amine-based compound | | | - | | | 1 | 1 | 1 |
| | Ultraviolet light absorber/Inorganic pigment | | | | | | 0.3 | 0.3 | 0.3 |
| | Bulk density ($kg/m^3$) | | | 48 | 48 | 49 | 46 | 47 | 47 |
| | Average cell diameter (μm) | | | 89 | 93 | 71 | 69 | 67 | 71 |
| | Quantity of heat of fusion at high-temperature peak (J/g) | | | 14 | 15 | 14 | 14 | 13 | 14 |
| | Total quantity of heat of fusion (J/g) | | | 72 | 72 | 72 | 72 | 72 | 72 |
| | Degree of crystallinity (%) | | | 36 | 33 | 34 | 33 | 34 | 33 |
| | ΔHs (J/g) | | | 15 | 16 | 15 | 15 | 14 | 15 |
| | ΔHi (J/g) | | | 14 | 15 | 14 | 14 | 13 | 14 |
| | ΔHi × 0.86 (J/g) | | | 12 | 13 | 12 | 12 | 11 | 12 |
| | ΔHi × 1.2 (J/g) | | | 17 | 18 | 17 | 17 | 16 | 17 |
| | Steam pressure range (MPa(G)) | | | 0.26-0.30 | 0.28-0.30 | 0.29-0.31 | 0.28-0.30 | 0.28-0.30 | 0.28-0.30 |
| Expanded beads molded article | Density ($kg/m^3$) | | | 60 | 60 | 61 | 58 | 59 | 59 |
| | Before irradiation with light | | Tensile strength (kPa) | 1000 | 1010 | 970 | 995 | 990 | 985 |
| | | | Tensile elongation (%) | 25 | 25 | 23 | 25 | 25 | 25 |
| | | | Tensile strength/density (kPa/[$kg/m^3$]) | 17 | 17 | 16 | 17 | 17 | 17 |
| | Weather resistance | After irradiation with light (corresponding to 0.5 y) | Appearance evaluation | A | A | A | A | A | A |
| | | After irradiation with light (corresponding to 3.0 y) | Tensile strength (kPa) | 930 | 990 | 950 | 980 | 970 | 955 |
| | | | Tensile strength Ratio before irradiation with light (%) | 93 | 98 | 98 | 98 | 98 | 97 |
| | | | Tensile elongation (%) | 22 | 24 | 24 | 24 | 24 | 23 |
| | | | Appearance evaluation | A | A | B | A | A | A |

| | | | | 13 | 14 | 15 | 16 | 17 |
|---|---|---|---|---|---|---|---|---|
| Expanded beads | Type of resin | | | PP1 | | | | |
| | Hindered amine-based compound | | Type | HALS1 | | HALS2 | HALS1 | |
| | | | Content (% by mass) | 0.8 | 0.8 | 0.8 | 0.8 | 0.8 |
| | Ultraviolet light absorber | | Type | UVA4 | UVA1 | | - | UVA1 |
| | | | Content (% by mass) | 0.8 | 0.8 | 0.8 | | 0.8 |
| | Inorganic pigment | | Content (% by mass) | 3 | 1 | 3 | 3 | 3 |
| | Hindered amine-based compound/ Inorganic pigment | | | 0.3 | 2 | 0.3 | 0.3 | 0.3 |
| | Ultraviolet light absorber/ Hindered amine-based compound | | | 1 | 1 | 1 | - | 1 |
| | Ultraviolet light absorber/Inorganic pigment | | | 0.3 | 2 | 0.3 | | 0.3 |
| | Bulk density (kg/$m^3$) | | | 48 | 50 | 48 | 27 | 27 |
| | Average cell diameter (μm) | | | 70 | 76 | 68 | 120 | 116 |
| | Quantity of heat of fusion at high-temperature peak (J/g) | | | 14 | 15 | 14 | 15 | 15 |
| | Total quantity of heat of fusion (J/g) | | | 72 | 72 | 72 | 72 | 72 |
| | Degree of crystallinity (%) | | | 34 | 35 | 34 | 34 | 34 |
| | ΔHs (J/g) | | | 15 | 16 | 15 | 16 | 16 |
| | ΔHi (J/g) | | | 14 | 15 | 14 | 15 | 15 |
| | ΔHi × 0.86 (J/g) | | | 12 | 13 | 12 | 13 | 13 |
| | ΔHi × 1.2 (J/g) | | | 17 | 18 | 17 | 18 | 18 |
| | Steam pressure range (MPa(G)) | | | 0.28-0.30 | 0.28-0.30 | 0.28-0.30 | 0.28-0.30 | 0.28-0.30 |
| Expanded beads molded article | Density (kg/$m^3$) | | | 60 | 62 | 60 | 30 | 29 |
| | Before irradiation with light | | Tensile strength (kPa) | 1005 | 1025 | 990 | 590 | 570 |
| | | | Tensile elongation (%) | 25 | 25 | 25 | 30 | 30 |
| | | | Tensile strength/density (kPa/[kg/$m^3$]) | 17 | 17 | 17 | 20 | 20 |
| | Weather resistance | After irradiation with light (corresponding to 0.5 y) | Appearance evaluation | A | A | A | A | A |
| | | After irradiation with light (corresponding to 3.0 y) | Tensile strength (kPa) | 985 | 1010 | 980 | 555 | 545 |
| | | | Tensile strength Ratio before irradiation with light (%) | 98 | 99 | 99 | 94 | 96 |
| | | | Tensile elongation (%) | 24 | 24 | 24 | 26 | 27 |
| | | | Appearance evaluation | A | A | A | A | A |

Table 2

| | | | Comparative Example 1 | Comparative Example 2 | Comparative Example 3 | Comparative Example 4 | Comparative Example 5 |
|---|---|---|---|---|---|---|---|
| Expanded beads | Type of resin | | PP1 | PP1 | PP1 | PP1 | PP1 |
| Expanded beads | Hindered amine-based compound | Type | - | HALS3 | HALS4 | HALS5 | HALS1 |
| Expanded beads | Hindered amine-based compound | Content (% by mass) | - | 0.8 | 0.8 | 0.8 | 5 |
| Expanded beads | Inorganic pigment | Content (% by mass) | - | 3 | 3 | 3 | 3 |
| Expanded beads | Hindered amine-based compound/ Inorganic pigment | | - | 0.3 | 0.3 | 0.3 | 2 |
| Expanded beads | Bulk density (kg/$m^3$) | | 47 | 48 | 48 | 46 | 48 |
| Expanded beads | Average cell diameter (μm) | | 96 | 78 | 80 | 58 | 81 |
| Expanded beads | Total quantity of heat of fusion (J/g) | | 72 | 72 | 72 | 72 | 72 |
| Expanded beads | Quantity of heat of fusion at high-temperature peak (J/g) | | 14 | 14 | 14 | 15 | 13 |
| Expanded beads | Degree of crystallinity (%) | | 36 | 34 | 34 | 33 | 30 |
| Expanded beads | ΔHs (J/g) | | 15 | 15 | 15 | 16 | 14 |
| Expanded beads | ΔHi (J/g) | | 14 | 14 | 14 | 15 | 13 |
| Expanded beads | ΔHi × 0.86 (J/g) | | 12 | 12 | 12 | 13 | 11 |
| Expanded beads | ΔHi × 1.2 (J/g) | | 17 | 17 | 17 | 18 | 16 |
| Expanded beads | Steam pressure range (MPa(G)) | | 0.24-0.28 | 0.30 | 0.30 | 0.30 | 0.28 |
| Expanded beads molded article | Density (kg/$m^3$) | | 59 | 60 | 60 | 58 | 60 |
| Expanded beads molded article | Before irradiation with light | Tensile strength (kPa) | 1000 | 885 | 890 | 845 | 760 |
| Expanded beads molded article | Before irradiation with light | Tensile elongation (%) | 25 | 20 | 20 | 19 | 18 |
| Expanded beads molded article | Before irradiation with light | Tensile strength/Density (kPa/[kg/$m^3$]) | 17 | 15 | 15 | 15 | 13 |
| Expanded beads molded article | Weather resistance: After irradiation with light (corresponding to 0.5 y) | Appearance evaluation | C | A | A | A | A |
| Expanded beads molded article | Weather resistance: After irradiation with light (corresponding to 3.0 y) | Tensile strength (kPa) | Sample disintegration and unmeasurable | 805 | 780 | 755 | 740 |
| Expanded beads molded article | Weather resistance: After irradiation with light (corresponding to 3.0 y) | Tensile strength Ratio before irradiation with light (%) | | 91 | 88 | 89 | 97 |
| Expanded beads molded article | Weather resistance: After irradiation with light (corresponding to 3.0 y) | Tensile elongation (%) | | 17 | 15 | 16 | 12 |
| Expanded beads molded article | Weather resistance: After irradiation with light (corresponding to 3.0 y) | Appearance evaluation | C | C | C | C | A |

| | | | | Comparative Example 6 | Comparative Example 7 | Comparative Example 8 | Comparative Example 9 | Comparative Example 10 |
|---|---|---|---|---|---|---|---|---|
| Expanded beads | Type of resin | | | PP1 | PP2 | | | PP4 |
| | Hindered amine-based compound | | Type | HALS2 | HALS3 | HALS4 | HALS5 | HALS1 |
| | | | Content (% by mass) | 5 | 0.8 | 0.8 | 0.8 | 0.8 |
| | Inorganic pigment | | Content (% by mass) | 3 | 3 | 3 | 3 | 3 |
| | Hindered amine-based compound/ Inorganic pigment | | | 2 | 0.3 | 0.3 | 0.3 | 0.3 |
| | Bulk density (kg/m$^3$) | | | 49 | 49 | 48 | 47 | 48 |
| | Average cell diameter (μm) | | | 83 | 87 | 85 | 62 | 61 |
| | Total quantity of heat of fusion (J/g) | | | 72 | 70 | 70 | 70 | 94 |
| | Quantity of heat of fusion at high-temperature peak (J/g) | | | 13 | 13 | 14 | 13 | 33 |
| | Degree of crystallinity (%) | | | 30 | 32 | 31 | 32 | 45 |
| | ΔHs (J/g) | | | 14 | 14 | 15 | 14 | 21 |
| | ΔHi (J/g) | | | 13 | 13 | 14 | 13 | 40 |
| | ΔHi × 0.86 (J/g) | | | 11 | 11 | 12 | 11 | 34 |
| | ΔHi × 1.2 (J/g) | | | 16 | 16 | 17 | 16 | 48 |
| | Steam pressure range (MPa(G)) | | | 0.28 | 0.32 | 0.32 | 0.32 | 0.42-0.44 |
| Expanded beads molded article | Density (kg/m$^3$) | | | 61 | 61 | 60 | 59 | 60 |
| | Before irradiation with light | | Tensile strength (kPa) | 775 | 900 | 915 | 885 | 685 |
| | | | Tensile elongation (%) | 18 | 19 | 19 | 17 | 6.9 |
| | | | Tensile strength/Density (kPa/[kg/m$^3$]) | 13 | 15 | 15 | 15 | 11 |
| | Weather resistance | After irradiation with light (corresponding to 0.5 y) | Appearance evaluation | A | A | A | A | A |
| | | After irradiation with light (corresponding to 3.0 y) | Tensile strength (kPa) | 750 | 825 | 810 | 800 | - |
| | | | Tensile strength Ratio before irradiation with light (%) | 97 | 92 | 89 | 90 | |
| | | | Tensile elongation (%) | 12 | 17 | 15 | 14 | |
| | | | Appearance evaluation | A | C | C | C | |

| | | | | Comparative Example | | | |
|---|---|---|---|---|---|---|---|
| | | | | 11 | 12 | 13 | 14 |
| Expanded beads | Type of resin | | | PP4 | | | |
| Expanded beads | Hindered amine-based compound | | Type | HALS2 | HALS3 | HALS4 | HALS5 |
| Expanded beads | Hindered amine-based compound | | Content (% by mass) | 0.8 | 0.8 | 0.8 | 0.8 |
| Expanded beads | Inorganic pigment | | Content (% by mass) | 3 | 3 | 3 | 3 |
| Expanded beads | Hindered amine-based compound/ Inorganic pigment | | | 0.3 | 0.3 | 0.3 | 0.3 |
| Expanded beads | Bulk density (kg/m$^3$) | | | 49 | 48 | 47 | 48 |
| Expanded beads | Average cell diameter (μm) | | | 60 | 60 | 61 | 55 |
| Expanded beads | Total quantity of heat of fusion (J/g) | | | 94 | 94 | 94 | 94 |
| Expanded beads | Quantity of heat of fusion at high-temperature peak (J/g) | | | 34 | 31 | 32 | 33 |
| Expanded beads | Degree of crystallinity (%) | | | 44 | 46 | 45 | 45 |
| Expanded beads | ΔHs (J/g) | | | 22 | 20 | 21 | 21 |
| Expanded beads | ΔHi (J/g) | | | 42 | 38 | 40 | 40 |
| Expanded beads | ΔHi × 0.86 (J/g) | | | 36 | 33 | 34 | 34 |
| Expanded beads | ΔHi × 1.2 (J/g) | | | 50 | 46 | 48 | 48 |
| | Steam pressure range (MPa(G)) | | | 0.42-0.44 | 0.42-0.44 | 0.42-0.44 | 0.42-0.44 |
| Expanded beads molded article | Density (kg/m$^3$) | | | 61 | 60 | 59 | 60 |
| Expanded beads molded article | Before irradiation with light | | Tensile strength (kPa) | 690 | 680 | 670 | 680 |
| Expanded beads molded article | Before irradiation with light | | Tensile elongation (%) | 6.7 | 6.7 | 6.6 | 6.7 |
| Expanded beads molded article | Before irradiation with light | | Tensile strength/Density (kPa/[kg/m$^3$]) | 11 | 11 | 11 | 11 |
| Expanded beads molded article | Weather resistance | After irradiation with light (corresponding to 0.5 y) | Appearance evaluation | A | A | A | A |
| Expanded beads molded article | Weather resistance | After irradiation with light (corresponding to 3.0 y) | Tensile strength (kPa) | - | | | |
| Expanded beads molded article | Weather resistance | After irradiation with light (corresponding to 3.0 y) | Tensile strength Ratio before irradiation with light (%) | | | | |
| Expanded beads molded article | Weather resistance | After irradiation with light (corresponding to 3.0 y) | Tensile elongation (%) | | | | |
| Expanded beads molded article | Weather resistance | After irradiation with light (corresponding to 3.0 y) | Appearance evaluation | | | | |

As seen from the results shown in Tables 1 and 2, the expanded beads of Examples have excellent in-mold moldability even under low molding pressure conditions, and can produce a good expanded beads molded article over a wide range of molding pressures. In addition, the expanded beads molded articles of Examples show excellent tensile physical properties such as tensile elongation and tensile strength in the tensile test. Furthermore, it can be seen that the expanded beads molded articles of Examples maintain their tensile physical properties and have no change in appearance in a weather resistance test under conditions equivalent to being irradiated with sunlight for about three years. These show that the expanded beads of the present invention can produce an expanded beads molded article with excellent weather resistance over a long period of time and excellent tensile physical properties. Furthermore, these show that the expanded beads molded article of the present invention is excellent in weather resistance over a long period of time and excellent in tensile physical properties.

INDUSTRIAL APPLICABILITY

The expanded beads molded article according to the present invention is excellent in weather resistance over a long period of time and excellent in tensile physical properties. Therefore, the expanded beads molded article according to the present invention can be suitably used as an impact absorbing material, a heat insulating material, various packaging materials and the like for applications such as food transport containers, packaging and cushioning materials for electric and electronic components, vehicle members such as automobile bumpers, building members such as residential heat insulating materials, miscellaneous goods, furniture, and sports goods.

## Claims

1. An expanded bead comprising a polypropylene-based resin as a base resin and a hindered amine-based compound, wherein the polypropylene-based resin has a degree of crystallinity of 45% or less, the hindered amine-based compound has a structure represented by the following formula (I), and a content of the hindered amine-based compound in the expanded bead is 0.01% by mass or more and 4% by mass or less:

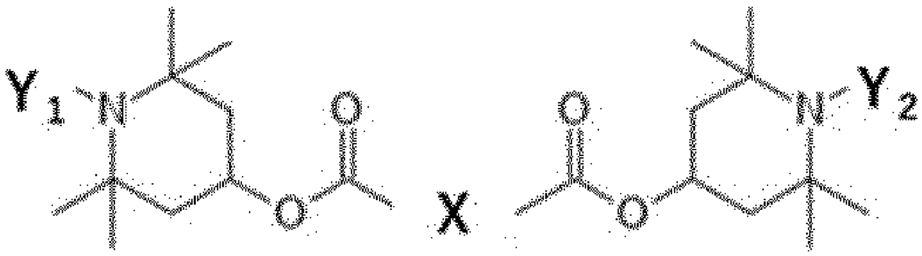

(I)

wherein X represents an alkylene group, and $Y_1$ and $Y_2$ each independently represent a hydrocarbon group or a hydrocarbon group bonded via an oxygen atom.

2. The expanded bead according to claim 1, further comprising an inorganic pigment, wherein a ratio of a content of the hindered amine-based compound to a content of the inorganic pigment is 0.01 or more and 8 or less.

3. The expanded bead according to claim 1 or 2, further comprising an ultraviolet light absorber A having a molecular weight of 360 or more, wherein a content of the ultraviolet light absorber A in the expanded bead is 0.01% by mass or more and 2% by mass or less.

4. The expanded bead according to any one of claims 1 to 3, wherein the hindered amine-based compound has a molecular weight of 500 or more and 1,000 or less.

5. The expanded bead according to any one of claims 1 to 4, wherein a bulk density of the expanded bead is 10 $kg/m^3$ or more and 500 $kg/m^3$ or less.

6. The expanded bead according to any one of claims 1 to 5, wherein an average cell diameter of the expanded beads is 50 $\mu m$ or more and 250 $\mu m$ or less.

7. An expanded beads molded article produced by in-mold molding of the expanded bead according to any one of claims 1 to 6.

## INTERNATIONAL SEARCH REPORT

International application No. **PCT/JP2023/029853**

**A. CLASSIFICATION OF SUBJECT MATTER**

***C08J 9/16***(2006.01)i
FI: C08J9/16 CES

According to International Patent Classification (IPC) or to both national classification and IPC

**B. FIELDS SEARCHED**

Minimum documentation searched (classification system followed by classification symbols)

C08J9/16

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2017-197644 A (KANEKA CORP) 02 November 2017 (2017-11-02) entire text | 1-7 |
| A | JP 2003-321567 A (JSP CORP) 14 November 2003 (2003-11-14) entire text | 1-7 |
| A | JP 2013-035949 A (KANEKA CORP) 21 February 2013 (2013-02-21) entire text | 1-7 |
| A | JP 11-147972 A (JSP CORP) 02 June 1999 (1999-06-02) entire text | 1-7 |
| A | JP 2017-066204 A (JAPAN POLYPROPYLENE CORP) 06 April 2017 (2017-04-06) entire text | 1-7 |
| P, X | JP 2023-025505 A (JSP CORP) 22 February 2023 (2023-02-22) entire text, in particular, claims, example 7 | 1, 2, 4-7 |
| P, A | WO 2022/190565 A1 (JSP CORP) 15 September 2022 (2022-09-15) entire text | 1-7 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **01 November 2023** | **14 November 2023** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

INTERNATIONAL SEARCH REPORT

International application No.
PCT/JP2023/029853

C. DOCUMENTS CONSIDERED TO BE RELEVANT

| Category* | Citation of document, with indication, where appropriate, of the relevant passages | Relevant to claim No. |
|---|---|---|
| P, A | JP 2023-024310 A (JSP CORP) 16 February 2023 (2023-02-16) entire text | 1-7 |
| P, A | JP 2023-025507 A (JSP CORP) 22 February 2023 (2023-02-22) entire text | 1-7 |
| P, A | WO 2023/090311 A1 (KANEKA CORP) 25 May 2023 (2023-05-25) entire text | 1-7 |

Form PCT/ISA/210 (second sheet) (January 2015)

**INTERNATIONAL SEARCH REPORT**
**Information on patent family members**

International application No.
**PCT/JP2023/029853**

| Patent document cited in search report | Publication date (day/month/year) | Patent family member(s) | Publication date (day/month/year) |
|---|---|---|---|
| JP 2017-197644 A | 02 November 2017 | (Family: none) | |
| JP 2003-321567 A | 14 November 2003 | US 2004/0256757 A1<br>entire text<br>WO 2003/037971 A2<br>EP 1448683 A1<br>CA 2465664 A<br>TW 200300151 A<br>KR 10-0881039 B1<br>CN 1612913 A<br>AU 2002341408 A<br>MX PA04004175 A | |
| JP 2013-035949 A | 21 February 2013 | (Family: none) | |
| JP 11-147972 A | 02 June 1999 | (Family: none) | |
| JP 2017-066204 A | 06 April 2017 | (Family: none) | |
| JP 2023-025505 A | 22 February 2023 | (Family: none) | |
| WO 2022/190565 A1 | 15 September 2022 | WO 2022/191316 A1<br>entire text | |
| JP 2023-024310 A | 16 February 2023 | EP 4130116 A1<br>entire text<br>CN 115703909 A | |
| JP 2023-025507 A | 22 February 2023 | (Family: none) | |
| WO 2023/090311 A1 | 25 May 2023 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2003321567 A
- JP S4638359 B
- JP S5122951 B
- JP H446217 B
- JP H649795 B
- JP H622919 B